(19) Europäisches Patentamt
European Patent Office
Office européen des brevets

(11) **EP 3 980 749 B1**

(12) **FASCICULE DE BREVET EUROPEEN**

(45) Date de publication et mention
de la délivrance du brevet:
**26.07.2023  Bulletin 2023/30**

(21) Numéro de dépôt: **20732148.0**

(22) Date de dépôt: **04.06.2020**

(51) Classification Internationale des Brevets (IPC):
**G01N 21/3504** *(2014.01)*     **G01N 21/3581** *(2014.01)*
**G01N 21/359** *(2014.01)*      **G01N 21/41** *(2006.01)*
**G01N 21/3577** *(2014.01)*     **G01N 21/59** *(2006.01)*

(52) Classification Coopérative des Brevets (CPC):
**G01N 21/253;** G01N 21/3504; G01N 21/3577;
G01N 21/3581; G01N 21/359; G01N 2021/3137;
G01N 2021/3196; G01N 2021/4126;
G01N 2021/438; G01N 2021/5957

(86) Numéro de dépôt international:
**PCT/EP2020/065460**

(87) Numéro de publication internationale:
**WO 2020/245257 (10.12.2020 Gazette 2020/50)**

(54) **PROCÉDÉ ET DISPOSITIF D'ANALYSE D'UN ÉCHANTILLON, METTANT EN OEUVRE UN SUPPORT RÉSONANT, ILLUMINÉ PAR UN RAYONNEMENT INFRA-ROUGE**

VERFAHREN UND VORRICHTUNG ZUR ANALYSE EINER PROBE MITTELS EINES DURCH INFRAROTSTRAHLUNG BELEUCHTETEN RESONANZTRÄGERS

METHOD AND DEVICE FOR ANALYSING A SAMPLE USING A RESONANT SUPPORT, ILLUMINATED BY INFRARED RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.06.2019  FR 1906134**

(43) Date de publication de la demande:
**13.04.2022  Bulletin 2022/15**

(73) Titulaires:
  • **Centre National de la Recherche Scientifique**
    **75016 Paris (FR)**
  • **CPE Lyon Formation Continue et Recherche**
    **69100 Villeurbanne (FR)**
  • **Ecole Centrale de Lyon**
    **69130 Ecully (FR)**
  • **Institut National des Sciences Appliquées de Lyon**
    **69100 Villeurbanne (FR)**
  • **Université Claude Bernard Lyon 1**
    **69100 Villeurbanne (FR)**

  • **COMMISSARIAT À L'ÉNERGIE ATOMIQUE ET AUX**
    **ÉNERGIES ALTERNATIVES**
    **75015 Paris (FR)**

(72) Inventeurs:
  • **DUPOY, Mathieu**
    **38054 GRENOBLE Cedex 9 (FR)**
  • **FOURNIER, Maryse**
    **38054 GRENOBLE Cedex 9 (FR)**
  • **BENYATTOU, Taha**
    **69390 VOURLES (FR)**
  • **JAMOIS, Cécile**
    **69300 CALUIRE (FR)**
  • **BERGUIGA, Lotfi**
    **69007 LYON (FR)**
  • **GAIGNEBET, Nicolas**
    **84240 La Tour d'Aigues (FR)**
  • **GEHIN, Thomas**
    **69100 VILLEURBANNE (FR)**

(74) Mandataire: **INNOV-GROUP**
    **310, avenue Berthelot**
    **69372 Lyon Cedex 08 (FR)**

(56) Documents cités:
EP-A1- 3 147 646     US-A1- 2004 155 309

- **ANDREAS TITTL ET AL: "Imaging-based molecular barcoding with pixelated dielectric metasurfaces", SCIENCE, vol. 360, no. 6393, 8 juin 2018 (2018-06-08), pages 1105-1109, XP055673083, US ISSN: 0036-8075, DOI: 10.1126/science.aas9768 & ANDREAS TITTL ET AL: "Supplementary Materials for: Imaging-based molecular barcoding with pixelated dielectric metasurfaces", SCIENCE, vol. 360, no. 6393, 7 juin 2018 (2018-06-07), pages 1105-1109, XP055494775, US ISSN: 0036-8075, DOI: 10.1126/science.aas9768**
- **CHENG F ET AL: "Tuning asymmetry parameter of Fano resonance of spoof surface plasmons by modes coupling", APPLIED PHYSICS LETTERS, A I P PUBLISHING LLC, US, vol. 100, no. 13, 26 mars 2012 (2012-03-26), pages 131110-131110, XP012155359, ISSN: 0003-6951, DOI: 10.1063/1.3698117 [extrait le 2012-03-27]**

## Description

### DOMAINE TECHNIQUE

Le domaine technique de l'invention est l'analyse d'un échantillon, l'échantillon étant déposé sur un support comportant des cristaux photoniques dont les propriétés spectrales de transmission ou de réflexion comportent une longueur d'onde de résonance, cette dernière subissant une variation sous l'effet de la présence d'un analyte.

### ART ANTERIEUR

Le recours à la détection infra-rouge est usuel dans le domaine de l'analyse d'échantillons. En effet, sous l'effet d'une illumination infra-rouge, on peut détecter une signature d'un échantillon, à partir de laquelle on obtient une information relative à la composition chimique de l'échantillon.

Dans le domaine de la biologie ou de la santé, par exemple, la caractérisation d'échantillons par imagerie spectrale infrarouge est à présent une technologie largement décrite dans la littérature pour ses applications dans le diagnostic, et en particulier dans le domaine de l'histopathologie. Elle permet d'obtenir, sans marquage, des informations biomoléculaires relatives à des cellules ou à des tissus. Cette méthode est basée sur une signature spectrale d'un échantillon vis-à-vis d'une pathologie. Lorsqu'un faisceau lumineux traversant l'échantillon présente une longueur d'onde correspondant à une énergie entre deux niveaux de vibration moléculaire, une partie du faisceau est absorbée. Ainsi, par spectrométrie d'absorption, on peut estimer une absorbance spectrale de l'échantillon, permettant l'obtention d'une information sur la composition moléculaire de ce dernier. Le spectre de l'absorbance constitue en cela une signature moléculaire de l'échantillon.

Cependant, dans ce type de méthode, il est nécessaire de balayer l'échantillon avec un faisceau laser. La taille du faisceau laser conditionne en effet la résolution spatiale de la mesure. Aussi, lorsqu'on souhaite obtenir une information spectrale spatialement résolue, le faisceau laser doit être fin. Il en résulte qu'une analyse d'une surface d'échantillon de quelques mm$^2$ ou quelques cm$^2$ est longue. De plus, l'instrumentation liée à l'imagerie spectrale infrarouge est complexe et onéreuse.

En dehors du domaine des échantillons biologiques, la détection infra-rouge est usuelle dans le domaine de la détection de gaz. C'est par exemple le cas des capteurs de gaz NDIR (non dispersive Infra red). Dans ce type de capteur, un gaz est illuminé par une source de lumière infrarouge, dans une bande spectrale d'illumination correspondant à une bande spectrale d'absorption d'une espèce gazeuse. Un photodétecteur détecte la lumière s'étend propagée à travers le gaz. La quantité de lumière détectée par le photodétecteur, dans la bande spectrale d'absorption, est représentative de l'atténuation de la lumière par l'espèce gazeuse. A partir de la quantité de lumière détectée, il est possible d'estimer une quantité de l'espèce gazeuse dans le gaz.

La publication Andreas Titl et al imaging based molecular barcoding with pixelated dielectric metasurfaces », Science, vol. 360, n°6393, 2018-06-08, pp 1105-1109, décrit un support comportant des cristaux photoniques résonants, permettant d'obtenir des profils d'absorption de rayonnement infra-rouge de protéines.

Le document US2004/155309 décrit le recours à des structures métalliques induisant une résonance plasmon, pour l'analyse d'échantillons.

Le document Cheng F. et al « Tuning asymmetry parameter of Fano résonance of spoof surface plasmons by modes coupling », Applied Physics Letters, vol 100, n° 3, 2012-03-26 décrit des structures métalliques induisant une résonance plasmon. Chaque structure est constituée de deux motifs décalés l'un par rapport à l'autre, le décalage étant fixe.

Les inventeurs ont conçu un dispositif d'analyse simple d'utilisation, ne nécessitant pas d'instrumentation complexe, tel qu'un spectromètre, et pouvant être mis en oeuvre pour étudier la composition d'un échantillon.

### EXPOSE DE L'INVENTION

L'invention est définie dans la revendication 1. Il s'agit d'un procédé d'analyse d'un échantillon, l'échantillon étant susceptible de comporter un analyte, l'échantillon s'étendant sur un support résonant, le support résonant comportant une surface sur laquelle s'étendent plusieurs cristaux photoniques, séparés les uns des autres, de telle sorte que l'échantillon s'étend entre une source de lumière et les cristaux photoniques, les cristaux photoniques étant tels que :

- une longueur d'onde de résonance est associée à chaque cristal photonique, les longueurs d'onde de résonance des cristaux photoniques définissant une bande spectrale de résonance, s'étendant entre 2 μm et 20 μm ;
- la transmission ou la réflexion de la lumière, par chaque cristal photonique est maximale à la longueur d'onde de résonance qui lui est associée ;

le procédé comportant les étapes suivantes :

a) illumination du support résonant par la source de lumière, la source de lumière émettant une onde lumineuse d'illumination, définissant une bande spectrale d'illumination recouvrant au moins en partie la bande spectrale de résonance, de telle sorte que plusieurs cristaux photoniques sont simultanément illuminés ;

b) acquisition d'une image du support résonant, dite image de mesure, par un capteur d'image, l'image comportant des régions d'intérêt différentes, chaque région d'intérêt étant optiquement couplée à un cristal photonique de telle sorte que chaque région d'intérêt représente une intensité transmise ou réfléchie par chaque cristal photonique lors de l'illumination du support résonant;

puis détermination de la présence de l'analyte dans l'échantillon à partir de l'image de mesure. De préférence, deux régions d'intérêt différentes sont optiquement couplées à deux cristaux photoniques différents.

Selon un mode de réalisation, le procédé comporte également :

c) prise en compte d'une image de référence, l'image de référence étant représentative d'une image acquise par le capteur d'image, lorsque le support résonant est illuminé dans la bande spectrale d'illumination, dans une configuration de référence, en l'absence de d'analyte ;
d) comparaison de l'image de mesure, acquise lors de l'étape b) avec l'image de référence, prise en compte lors de l'étape c);
e) en fonction de la comparaison, détermination de la présence de l'analyte dans l'échantillon.

Selon un mode de réalisation, plusieurs cristaux photoniques sont alignés selon une ligne parallèlement à un axe longitudinal, de telle sorte que la longueur d'onde de résonance respectivement associée à un cristal photonique augmente, ou diminue, progressivement le long de l'axe longitudinal. Le support résonant peut comporter différentes lignes de cristaux photoniques parallèles les unes aux autres, les cristaux photoniques formant des colonnes, parallèlement à un axe latéral, de telle sorte que les cristaux photoniques d'une même colonne présentent une même longueur d'onde de résonance. L'axe longitudinal et l'axe latéral sont sécants. L'axe longitudinal est de préférence perpendiculaire à l'axe latéral.

De préférence, les cristaux photoniques s'étendent selon un plan de support, l'onde lumineuse d'illumination se propageant jusqu'au support résonant parallèlement à un axe de propagation perpendiculaire ou sensiblement perpendiculaire au plan de support.

Selon un mode de réalisation, préalablement à l'étape a), le procédé comporte une étape de formation de l'image de référence, comportant :

- illumination du support résonant par la source de lumière, dans la bande spectrale d'illumination, sans analyte entre la source de lumière et le support résonant;
- acquisition d'une image du support résonant par le capteur d'image, l'image ainsi acquise formant l'image de référence.

L'image référence peut être une image obtenue en :

- illuminant, selon la bande spectrale d'illumination, un support de référence, considéré comme représentatif du support résonant illuminé dans l'étape a), la quantité d'analyte entre le support de référence et la source de lumière étant considérée comme nulle ;
- formant une image du support de référence, l'image ainsi formée correspondant à l'image de référence.

Selon un mode de réalisation, le support résonant comporte des cristaux photoniques de référence,

- dont la bande spectrale de résonance n'est pas modifiée par l'analyte ;
- ou dont la bande spectrale de résonance correspond à une longueur d'onde non absorbée par l'échantillon ;

auquel cas l'image de référence est une image des cristaux photoniques de référence lorsqu'ils sont illuminés selon la bande spectrale d'illumination.

L'image de référence et l'image de mesure peuvent former deux parties distinctes d'une même image acquise par le capteur d'image.

Selon un mode de réalisation,

- l'échantillon est un liquide ;
- le support résonant est en contact avec l'échantillon ;
- le support résonant comporte des cristaux photoniques adressant l'analyte, configurés pour être en contact avec l'analyte ;
- l'image de mesure comporte des régions d'intérêt associées à l'analyte, optiquement couplées aux cristaux photoniques adressant l'analyte ;
- sous l'effet du contact avec l'analyte, la longueur d'onde de résonance des cristaux photoniques adressant l'analyte subit une variation spectrale ;
- l'illumination étant telle que l'intensité d'illumination est variable, dans la bande spectrale de résonance, selon une fonction spectrale d'illumination.

Selon ce mode de réalisation, pour chaque cristal photonique adressant l'analyte, la longueur d'onde de résonance peut dépendre d'un indice de réfraction de l'échantillon, au niveau d'une interface entre l'échantillon et le cristal photonique, l'indice de réfraction variant en fonction de la quantité d'analyte au contact du cristal photonique.

Selon ce mode de réalisation, l'étape e) peut comporter les sous-étapes suivantes :

i) à partir de l'image de mesure, détermination d'un profil, dit profil de mesure, de l'intensité des régions d'intérêt associées à l'analyte ;
ii) à partir de l'image de référence, détermination d'un profil, dit profil de référence, représentatif de l'intensité, en l'absence d'analyte ou en présence d'une quantité connue d'analyte dans l'échantillon, des régions d'intérêt associées à l'analyte ;

de telle sorte que la présence de l'analyte est déterminée en fonction d'un décalage du profil de mesure par rapport au profil de référence.

Selon ce mode de réalisation, l'étape e) peut comporter les sous-étapes suivantes :

i) sur l'image de mesure, détermination d'une position, dite position de mesure, d'une région d'intérêt présentant une valeur d'intensité maximale parmi les régions d'intérêt associées à l'analyte ;
ii) sur l'image de référence, détermination d'une position, dite position de référence, d'une région d'intérêt présentant une valeur d'intensité maximale parmi les régions d'intérêt associées à l'analyte ;

de telle sorte que la présence de l'analyte est déterminée en fonction d'un décalage de la position de mesure par rapport à la position de référence.

Selon ce mode de réalisation, l'étape e) peut comporter une estimation d'une quantité d'analyte dans l'échantillon, en fonction de la comparaison entre l'image de mesure et de l'image de référence. La quantité d'analyte peut être estimée en fonction :

- du décalage du profil de mesure par rapport au profil de référence ;
- ou du décalage de la position de mesure par rapport à la position de référence.

La quantité d'analyte peut notamment être une concentration d'analyte.

Le procédé est tel que :

- chaque cristal photonique comporte des trous ménagés à travers une couche mince ;
- la longueur d'onde de résonance de chaque cristal photonique dépend du rayon ou de la diagonale des trous, et de l'espacement entre les trous, et éventuellement de l'indice de réfraction de l'échantillon.

Chaque cristal photonique comporte :

- des premiers trous, ayant une première dimension, la première dimension étant un rayon ou une diagonale, les premiers trous définissant un premier motif périodique;
- des deuxièmes trous, ayant une deuxième dimension, la deuxième dimension étant strictement inférieure à la première dimension, les deuxièmes trous définissant un deuxième motif périodique ;
- le deuxième motif et le premier motif sont décalés l'un par rapport à l'autre, parallèlement à la surface du support résonant, selon un décalage spatial ;

de telle sorte que la longueur d'onde de résonance associée à chaque cristal photonique dépend de la première dimension, de la deuxième dimension, et du décalage spatial.

Selon un mode de réalisation :

- des cristaux photoniques sont alignés parallèlement à un axe longitudinal ;
- les longueurs d'onde de résonance respectivement associées à deux cristaux photoniques adjacents sont décalées selon un pas de discrétisation compris entre 1 nm et 50 nm, et de préférence entre 1 nm et 10 nm.

Selon un mode de réalisation, des cristaux photoniques, adressant à un même analyte, sont recouverts d'une couche de fonctionnalisation, propice à une capture sélective, par exemple par greffage, de l'analyte sur les cristaux photoniques.

Selon ce mode de réalisation le support résonant peut comporter:

- des cristaux photoniques de rang 1 configurés pour capturer un premier analyte ;
- des cristaux photoniques de rang j configurés pour capturer un $j^{ième}$ analyte, différent des analytes capturés par les cristaux photoniques de rang inférieur à j.

j est un entier naturel non nul.

Selon ce mode de réalisation :

- les cristaux photoniques de même rang peuvent être alignés parallèlement à un axe longitudinal ;
- et les cristaux photoniques présentant une même longueur d'onde de résonance, en l'absence d'analyte capturé, peuvent être alignés parallèlement à un axe latéral, l'axe latéral et l'axe longitudinal n'étant pas parallèles.

Le support résonant peut être disposé entre la source de lumière et le capteur d'image, de telle sorte que lors de l'étape b), chaque région d'intérêt formée sur l'image de mesure est représentative d'une intensité transmise par le cristal photonique à laquelle elle est optiquement couplée.

Selon un mode de réalisation, aucune optique de formation d'image n'est disposée entre le capteur d'image et le support résonant ;

Selon un mode de réalisation, un système optique, de type lentille ou objectif, est disposé entre le capteur d'image et le support résonant, le système optique conjuguant le capteur d'image au support résonant.

Selon un mode de réalisation, le support résonant délimite un demi-espace, comportant la source de lumière, et le capteur d'image est disposé dans le même demi-espace que la source de lumière, de telle sorte que chaque région d'intérêt formée sur l'image de mesure est représentative d'une intensité réfléchie par le cristal photonique à laquelle elle est optiquement couplée.

Selon un mode de réalisation, l'échantillon est disposé entre la source de lumière et le support résonant, l'analyte étant apte à absorber l'onde lumineuse d'illumination, émise par la source de lumière, dans une bande spectrale d'absorption, le procédé étant tel que la bande spectrale d'absorption comporte au moins une longueur d'onde d'absorption correspondant à une longueur d'onde de résonance d'un cristal photonique. Le procédé comporte, à partir de l'image de mesure :

- une détermination d'au moins un cristal photonique, dont la longueur d'onde de résonance correspond à la longueur d'onde d'absorption;
- une identification de la longueur d'onde de résonance dudit cristal photonique ;
- une détermination de la présence de l'analyte à partir de la longueur d'onde de résonance du cristal photonique ainsi déterminé.

Le procédé peut alors comporter :

- à partir de l'image de mesure, une estimation d'une intensité lumineuse d'absorption, transmise ou réfléchie par au moins un cristal photonique dont la longueur d'onde de résonance est comprise dans la bande spectrale d'absorption ;
- une estimation d'une intensité lumineuse de référence, transmise ou réfléchie par ledit cristal photonique, en l'absence d'analyte ;
- une estimation d'une quantité d'analyte à partir de l'intensité lumineuse d'absorption et de l'intensité lumineuse de référence.

L'échantillon peut être est un gaz ou un liquide ou un solide.

Le dispositif d'analyse d'un échantillon associé au procédé selon l'invention comporte une source de lumière, un capteur d'image et un support résonant, disposé entre la source de lumière et le capteur d'image, de telle sorte que le capteur d'image est configuré pour acquérir une image du support résonant, le support résonant étant destiné à être disposé au contact d'un échantillon, ou face à un échantillon, le support résonant comportant une surface présentant des cristaux photoniques, séparés les uns des autres, le support résonant étant tel que :

- une longueur d'onde de résonance est associée à chaque cristal photonique, de telle sorte que la transmission ou la réflexion de la lumière, par chaque cristal photonique, est maximale à la longueur d'onde de résonance à laquelle il est associé, les longueurs d'onde de résonance des cristaux photoniques définissant une bande spectrale de résonance, s'étendant entre 2 $\mu$m et 20 $\mu$m ;
- la source de lumière est configurée pour illuminer simultanément différents cristaux photoniques, dans une bande spectrale d'illumination recouvrant au moins en partie la bande spectrale de résonance ;
- au moins deux cristaux photoniques sont configurés pour être en contact de ou face à un même analyte, lesdits cristaux photoniques étant associés à deux longueurs d'onde de résonance différentes, la longueur d'onde de résonance associée à chaque cristal photonique dépendant d'une quantité d'analyte au contact du cristal photonique.
- chaque cristal photonique comporte des trous ménagés à travers une couche mince ;
- la longueur d'onde de résonance de chaque cristal photonique dépend du rayon et de l'espacement entre les trous, ainsi que de l'indice de réfraction de la couche mince et éventuellement de l'indice de réfraction de l'échantillon.
- des premiers trous ayant une première dimension, la première dimension étant un rayon ou une diagonale, les premiers trous définissant un premier motif ;
- des deuxièmes trous, ayant une deuxième dimension, la deuxième dimension étant strictement inférieure à la première dimension, les deuxièmes trous définissant un deuxième motif périodique ;
- le deuxième motif et le premier motif sont décalés l'un par rapport à l'autre, parallèlement à la surface du support, selon un décalage spatial;

de telle sorte que la longueur d'onde de résonance associée à chaque cristal photonique dépend de la première dimension, de la deuxième dimension, et du décalage spatial.

Selon un mode de réalisation, les cristaux photoniques, configurés pour être en contact avec un même analyte, sont alignés parallèlement à un même axe longitudinal, les longueurs d'onde de résonance respectivement associées à deux cristaux photoniques adjacents étant décalées selon un pas de discrétisation compris entre 1 nm et 10 nm ou entre 1 nm et 50 nm.

Selon un mode de réalisation, des cristaux photoniques, adressant un analyte, sont configurés pour capturer sélectivement un même analyte. Ils peuvent notamment être recouverts d'une couche de fonctionnalisation d'intérêt, propice à une capture sélective de l'analyte.

Selon un mode de réalisation, le support d'analyse comporte

- des cristaux photoniques de rang 1, configurés pour capturer sélectivement un premier analyte ;
- des cristaux photoniques de rang j, configurés pour capturer sélectivement un jième analyte, différent des analytes de rang inférieurs à j.

Selon un mode de réalisation,

- les cristaux photoniques de même rang sont alignés parallèlement à un axe longitudinal;

- et les cristaux photoniques associés selon une même longueur d'onde de résonance, en l'absence d'analyte, sont alignés parallèlement à un axe latéral, l'axe latéral et l'axe longitudinal n'étant pas alignés.

Selon un mode de réalisation, les cristaux photoniques s'étendent selon un plan de support, et la source de lumière est configurée pour émettre une onde lumineuse d'illumination, dans la bande spectrale d'illumination, se propageant jusqu'au support selon un axe de propagation perpendiculaire ou sensiblement perpendiculaire au plan de support.

Le plan du support peut s'étendre parallèlement à un plan de détection défini par le capteur d'image.

Le dispositif peut comporter l'une des caractéristiques décrites en lien avec le premier objet de l'invention.

L'invention sera mieux comprise à la lecture de l'exposé des exemples de réalisation présentés, dans la suite de la description, en lien avec les figures listées ci-dessous.

**FIGURES**

La figure 1A est un premier exemple de dispositif selon l'invention.

La figure 1B représente un deuxième exemple de dispositif selon l'invention.

La figure 1C est un troisième exemple de dispositif selon l'invention.

La figure 1D est un détail du support résonant représenté sur les figures 1A, 1B et 1C.

Les figures 2A à 2H schématisent le fonctionnement de l'invention selon un premier mode de réalisation.

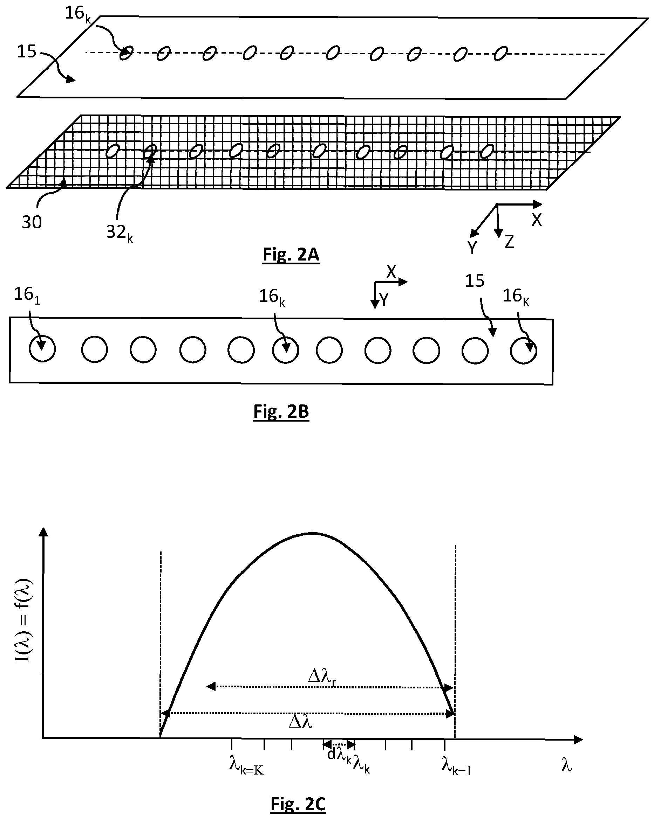

La figure 2A montre un exemple d'agencement du capteur d'image par rapport au support résonant.

La figure 2B schématise des cristaux photoniques adressant un même analyte et répartis selon une même ligne.

La figure 2C montre un exemple de fonction d'intensité spectrale que suit la source de lumière, dans une bande spectrale de résonance définie par les longueurs d'onde de résonance des cristaux photoniques formés sur le support résonant.

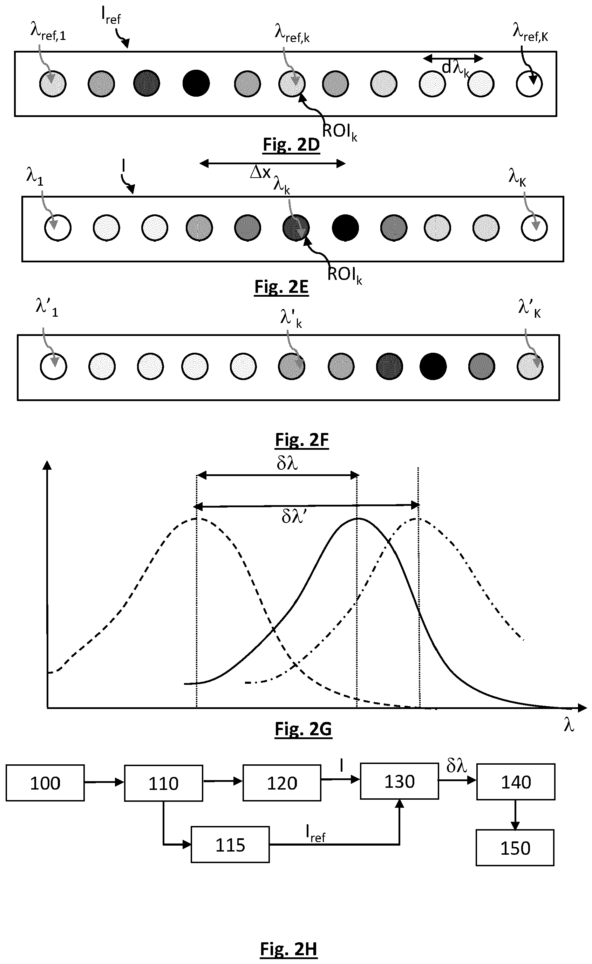

Les figures 2D, 2E et 2F illustrent une intensité transmise par chaque cristal photonique respectivement :

- en l'absence d'analyte ;
- en présence d'une faible quantité d'analyte capturé par le support résonant ;
- en présence d'une quantité élevée d'analyte capturé par le support résonant.

La figure 2G montre des profils, selon l'axe longitudinal, de l'intensité transmise par les cristaux photoniques représentés sur les figures 2D (pointillés), 2E (trait plein) à 2F (traits mixtes).

La figure 2H schématise les principales étapes d'un procédé selon l'invention.

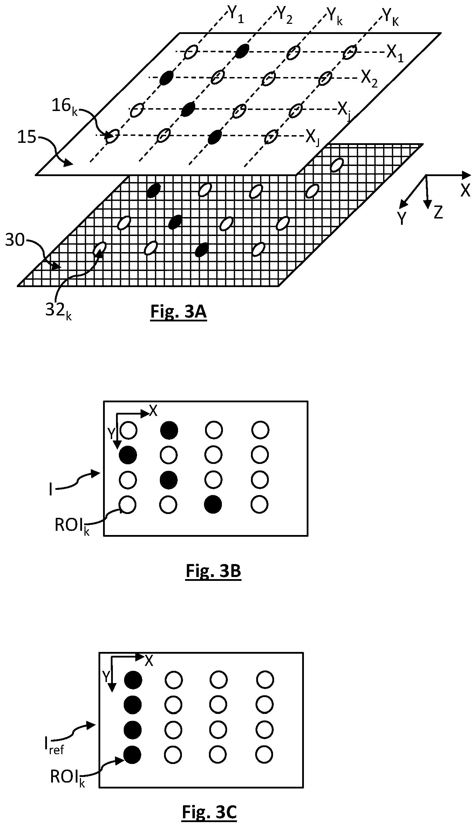

La figure 3A montre une superposition d'un support résonant et d'un capteur d'image d'un dispositif selon l'invention, l'invention fonctionnant selon un mode de réalisation dit bidimensionnel.

Les figures 3B et 3C illustrent une intensité transmise par chaque cristal photonique respectivement en présence d'analytes capturés par le support résonant et en l'absence d'analyte capturé sur le support.

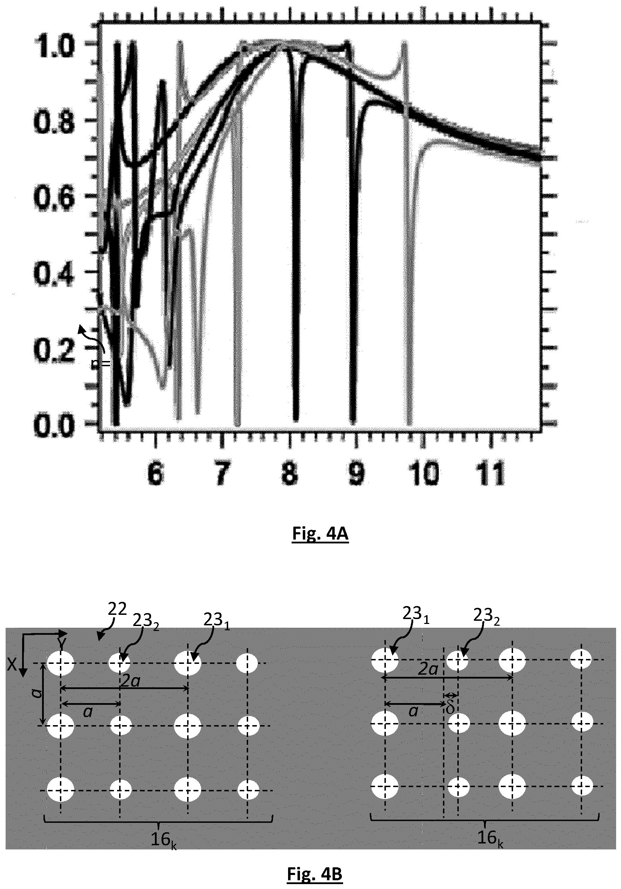

La figure 4A montre une variation de la longueur d'onde de résonance en transmission de cristaux photoniques en fonction de la longueur d'onde.

La figure 4B représente un détail d'un support résonant, le support résonant présentant des trous répartis selon une double période.

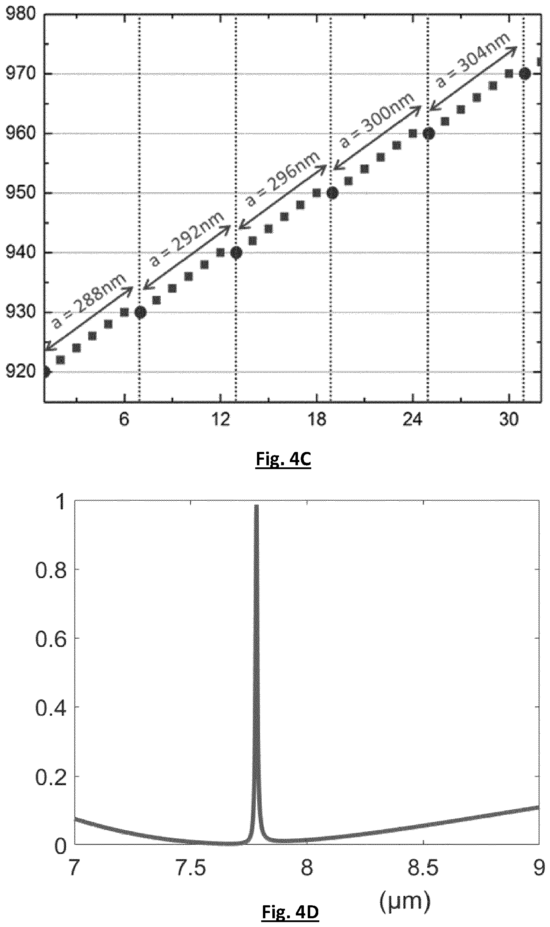

La figure 4C montre une évolution de la longueur d'onde de résonance en fonction de l'agencement des trous d'un cristal photonique tel que représenté sur la figure 4B.

La figure 4D montre une évolution modélisée de la réflectance d'un cristal photonique en fonction de la longueur d'onde.

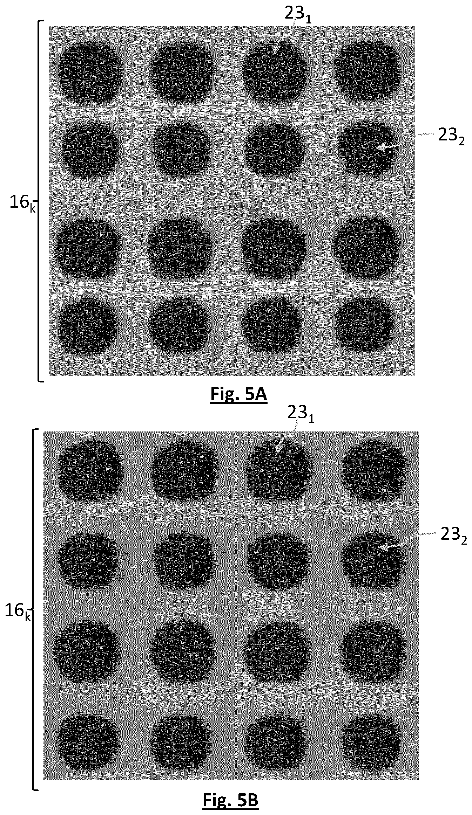

Les figures 5A et 5B sont des exemples de deux agencements différents de trous formant des cristaux photoniques.

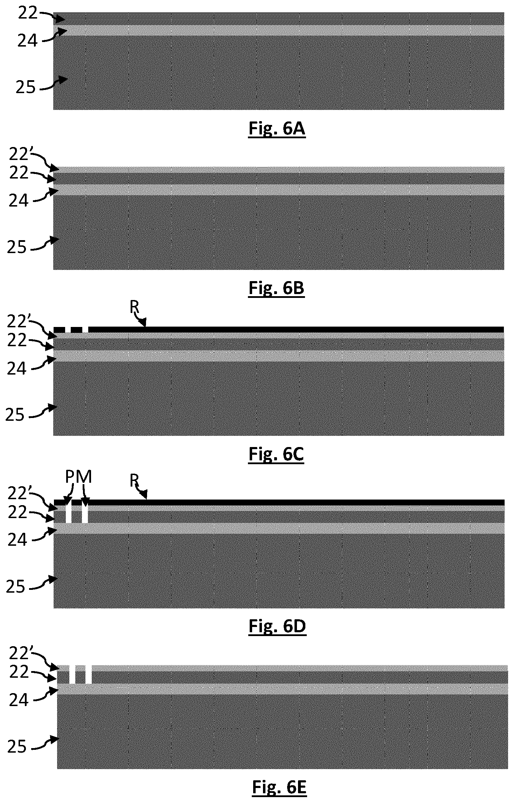

Les figures 6A à 6M illustrent les étapes de fabrication d'un support résonant.

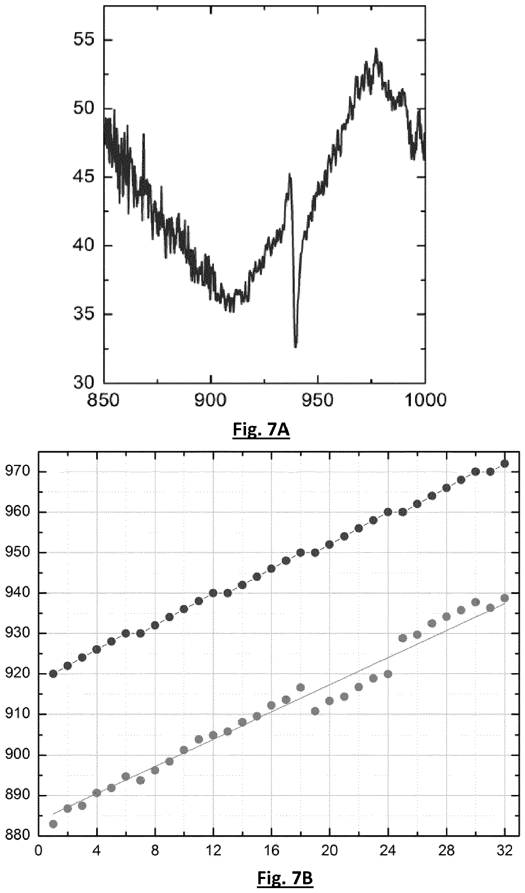

La figure 7A montre une évolution de la transmission spectrale d'un cristal photonique illuminé par un faisceau lumineux polychromatique, en incidence normale, en fonction de la longueur d'onde d'illumination. La figure 7A a été obtenue expérimentalement.

La figure 7B est une comparaison de longueurs d'onde de résonance de réflexion, mesurées expérimentalement et modélisées, pour différents cristaux photoniques.

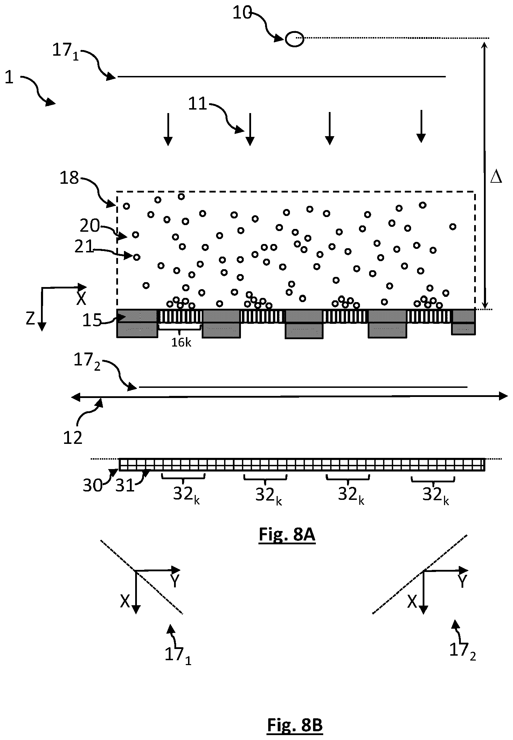

La figure 8A montre un mode de réalisation préféré de l'invention.

La figure 8B schématise les directions de polarisation de polariseurs décrits en lien avec la figure 8A.

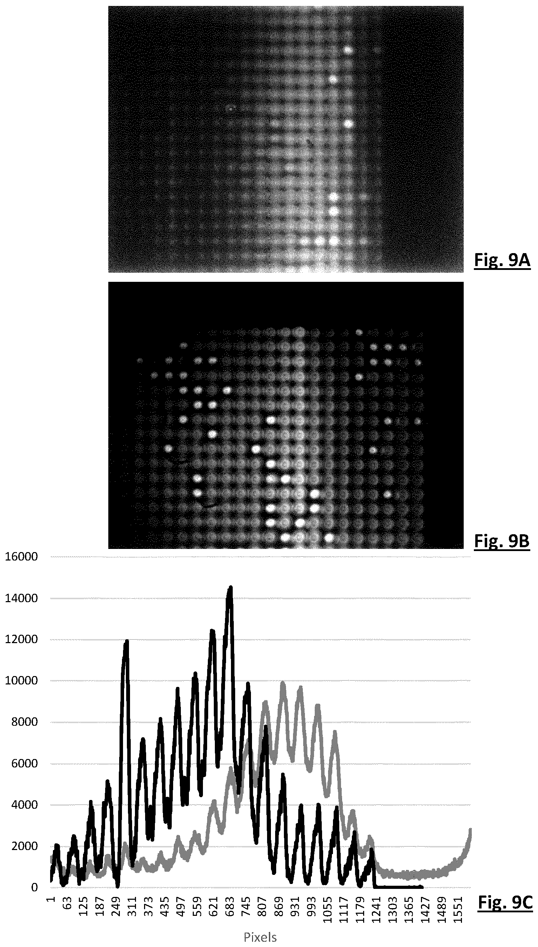

Les figures 9A et 9B sont respectivement des images d'un support résonant illuminé selon une fonction spectrale d'illumination, et mis au contact d'eau et d'éthanol.

La figure 9C est une comparaison de profils horizontaux respectivement formés sur les figures 9A et 9B.

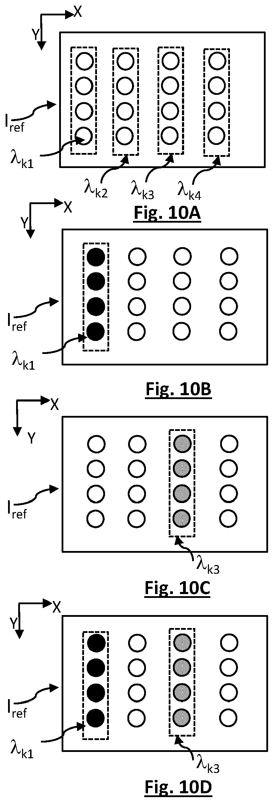

Les figures 10A à 10D schématisent des images obtenues selon un deuxième mode de réalisation.

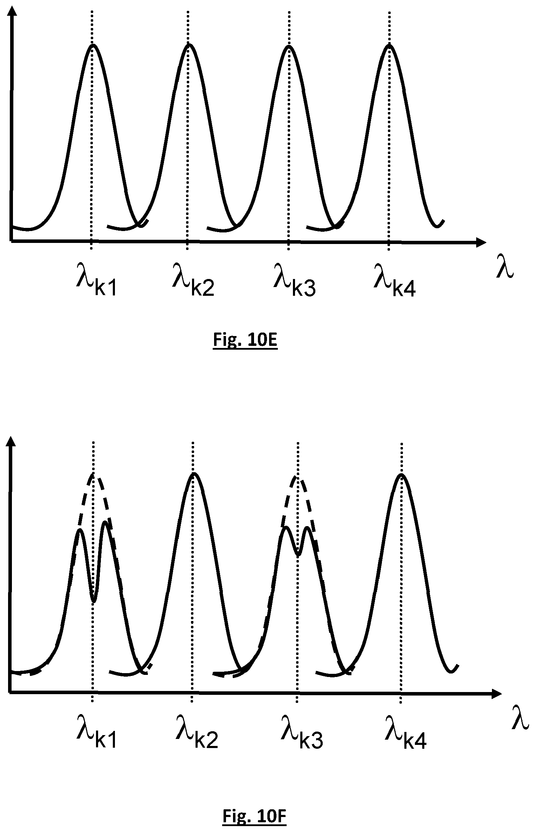

Les figures 10E et 10F schématisent des profils d'une intensité de la lumière transmise par des cristaux photoniques selon les configurations respectivement illustrées sur les figures 10A et 10D.

## EXPOSE DE MODES DE REALISATION PARTICULIERS

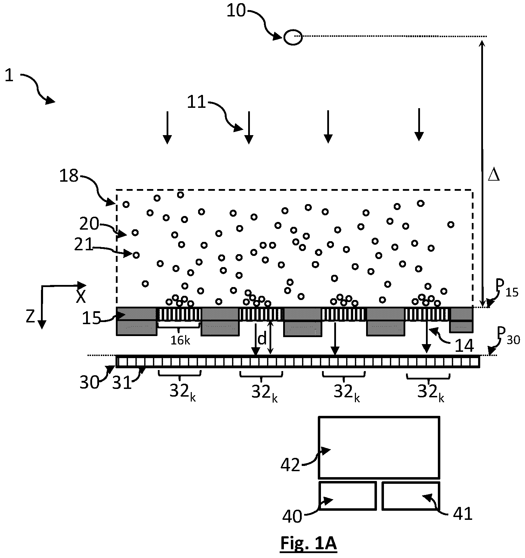

La figure 1A montre un exemple de dispositif 1 d'analyse d'un échantillon selon l'invention. Le dispositif 1 comporte une source de lumière 10, configurée pour émettre une onde lumineuse d'illumination 11 se propageant vers un échantillon 20. L'onde lumineuse d'illumination se propage parallèlement à un axe de propagation Z, dans une bande spectrale d'illumination $\Delta\lambda$. L'échantillon 20 est disposé sur un support 15, dit support résonant. L'échantillon 20 peut comporter être un gaz, ou un liquide, ou un solide, comportant au moins un analyte 21. L'échantillon est disposé entre la source de lumière 10 et le support résonant 15.

Par analyte, on entend une espèce chimique ou biologique dont on souhaite déterminer la présence, et éventuellement une quantité, dans l'échantillon. L'analyte 21 peut par exemple être une molécule chimique, une protéine, un peptide, un anticorps, un antigène, un fragment de séquence de nucléotides, ou une particule. Par particule, on entend par exemple une cellule biologique, une gouttelette insoluble dans un milieu, une nanobille. Il peut également s'agir d'un microorganisme, par exemple une bactérie, une levure ou une microalgue. De préférence, une particule a un diamètre, ou est inscrite dans un diamètre, inférieur à 20 $\mu$m, voire à 10 $\mu$m ou à 5 $\mu$m.

Lorsque l'échantillon est un gaz, l'analyte est une espèce gazeuse présentant une bande spectrale d'absorption $\Delta\lambda_a$ de la lumière comprise dans la bande spectrale d'illumination $\Delta\lambda$. L'espèce gazeuse peut être par exemple $CH_4$, $CF_4$, $COz$, $NO$, $NH_3$. D'une façon générale, l'espèce gazeuse présente une absorption considérée comme significative dans la bande spectrale d'illumination. Le cas d'un échantillon gazeux est abordé dans le deuxième mode de réalisation.

Lorsque l'échantillon est un solide, il est suffisamment transparent, dans au moins une partie de la bande spectrale d'illumination $\Delta\lambda$, de façon à permettre une propagation de la lumière à travers l'échantillon. Il peut par exemple s'agir d'une fine lame de tissu biologique obtenue à partir d'un prélèvement de type biopsie ou frottis. Il s'agit par exemple d'une lame d'anatomopathologie. Il peut également s'agir d'un extrait sec obtenu par séchage d'un liquide corporel, par exemple une fine lame de sang séché. L'analyte peut alors être une molécule, ou une partie d'une molécule, ou d'une liaison moléculaire, présentant une bande spectrale d'absorption $\Delta\lambda_a$ dans la bande spectrale d'illumination $\Delta\lambda$. Le cas d'un échantillon solide est abordé dans le deuxième mode de réalisation.

Par support résonant, on entend un support dont une partie est apte à entrer en résonance, de façon à transmettre ou à réfléchir une intensité maximale de lumière dans une longueur d'onde de résonance. La structure du support résonant est décrite par la suite.

L'échantillon 20 peut se présenter sous la forme d'une goutte déposée sur le support résonant 15. Il peut également s'agir d'un liquide ou d'un gaz, confiné dans une chambre fluidique 18, associée au support résonant 15. Le support résonant peut par exemple constituer une paroi de la chambre fluidique 18 dans laquelle s'étend l'échantillon. La chambre fluidique 18 est de préférence transparente dans la bande spectrale d'illumination $\Delta\lambda$. Elle peut par exemple comprendre ou être constituée de matériaux transparents dans l'infra-rouge : il s'agit par exemple de silicium, de germanium, de fluorure de calcium ($CaF_2$) ou de fluorure de baryum ($BaF_2$, ou de sulfure de Zinc ($ZnS$) ou de chalcogénure.

La source de lumière 10 peut être monochromatique ou polychromatique. L'onde d'illumination 11 s'étend selon une bande spectrale d'illumination $\Delta\lambda$. La bande spectrale d'illumination s'étend entre 2 $\mu$m et 20 $\mu$m. De préférence, la bande spectrale d'illumination s'étend entre une longueur d'onde minimale et une longueur d'onde maximale, la longueur d'onde minimale étant strictement supérieure à 1.5 $\mu$m, voire à 2 $\mu$m. Ainsi, la bande spectrale d'illumination peut s'étendre dans le proche infra-rouge (typiquement entre 2$\mu$m et 3 $\mu$m), ou dans l'infra-rouge moyen (typiquement entre 3 et 8 $\mu$m), ou dans l'infra-rouge long (typiquement jusqu'à 20 $\mu$m).

La source de lumière 10 peut être formée par un filament chauffé, formant une source de lumière dont l'émission spectrale est proche de celle d'un corps noir. La source de lumière peut être formée par un laser. Il peut s'agir d'un laser accordable en longueur d'onde, par exemple un laser QCL, acronyme de Quantum Cascade Laser, signifiant laser à cascade quantique. La source de lumière peut comporter plusieurs sources laser élémentaires QCL, émettant respectivement dans différentes bandes spectrales d'illumination.

Dans un premier mode de réalisation, décrit en lien avec les figures 2 à 9, la largeur de la bande spectrale d'illumination $\Delta\lambda$ est de préférence inférieure à 200 nm, voire inférieure à 100 nm voire à 10 nm. Dans un deuxième mode de réalisation, décrit en lien avec les figures 10A à 10F, la largeur de la bande spectrale d'illumination $\Delta\lambda$ peut être de quelques $\mu$m.

De préférence, la source de lumière 10 est disposée à une distance $\Delta$ du support résonant 15, de telle sorte que l'onde lumineuse 11 atteint ce dernier sous la forme d'une onde plane. Un élément optique de collimation, connu de l'homme du métier, peut être disposé entre la source de lumière 10 et l'échantillon 20, de façon à former une onde lumineuse 11 plane.

Le dispositif 1 comporte également un capteur d'image 30, sensible à l'infra-rouge. Le capteur d'image est de préférence un capteur pixelisé, comportant des pixels 31 disposés selon un arrangement matriciel. Les pixels du capteur d'image 30 définissent un plan de détection $P_{30}$. Dans cet exemple, le capteur d'image est formé par une matrice de bolomètres, chaque bolomètre de la matrice présentant une bande spectrale de détection comprise entre 2 $\mu$m et 20 $\mu$m. Chaque bolomètre

forme un pixel. Dans les exemples décrits par la suite, chaque pixel est formé par un bolomètre encapsulé sous vide.

De préférence, le plan de détection $P_{30}$ est disposé perpendiculairement à l'axe de propagation Z, ou sensiblement perpendiculairement à ce dernier. Par sensiblement perpendiculairement, il est entendu perpendiculairement, en admettant une tolérance angulaire de ± 20° ou de préférence ± 10°, voire ± 5°. Ainsi, l'onde d'illumination 11 émise par la source de lumière 10 atteint le support selon une incidence normale, à la tolérance angulaire près.

De préférence, le support résonant 15 définit un plan de support $P_{15}$. Le plan de support $P_{15}$ s'étend perpendiculairement à l'axe de propagation Z, ou sensiblement perpendiculairement à ce dernier. Le support résonant s'étend selon un axe longitudinal X et un axe latéral Y. Les axes X et Y sont coplanaires du plan de support. Ils sont sécants, et de préférence perpendiculaires.

De préférence, le plan de détection $P_{30}$ s'étend parallèlement au plan de support $P_{15}$.

Un aspect important de l'invention est que le support résonant 15 comporte des zones élémentaires nanostructurées, séparées les unes des autres, chaque zone élémentaire formant un cristal photonique $16_k$. Ainsi, le support résonant comporte des cristaux photoniques $16_k$, différents les uns des autres, et espacés les uns des autres. L'indice k est un entier strictement compris entre 1 et K, K correspondant au nombre de cristaux photoniques ménagés sur le support résonant 15.

Chaque cristal photonique $16_k$ présente une longueur d'onde de résonance $\lambda_k$ qui lui est propre. A la longueur d'onde de résonance $\lambda_k$ qui lui est associée, chaque cristal photonique $16_k$ présente un pic de transmission ou de réflexion de la lumière. Chaque cristal présente ainsi une longueur d'onde de résonance en réflexion et une longueur d'onde de résonance en transmission.

Le capteur d'image 30 est configuré de telle sorte que les pixels 31 sont répartis en groupes de pixels $32_k$, les pixels 31 appartenant à un même groupe de pixels $32_k$ étant optiquement couplés à un même cristal photonique $16_k$.

Par groupe de pixels, on entend un pixel ou un ensemble de pixels adjacents les uns des autres et optiquement couplés à un même cristal photonique.

Par optiquement couplé, il est entendu que les pixels 31 d'un même groupe de pixel $32_k$ collectent une lumière dont l'intensité est au moins 80% ou 90% due à la lumière se propageant à travers le cristal photonique $16_k$.

Dans l'exemple représenté sur la figure 1A, la distance d entre chaque cristal photonique $16_k$ et le groupe de pixel $32_k$ qui lui est respectivement associé, est de 500 µm. Cette distance est de préférence comprise entre quelques dizaines de µm et 1 mm. Une distance faible améliore le couplage optique entre chaque cristal photonique $16_k$ et le groupe de pixel $32_k$ qui lui est associé. La configuration représentée sur la figure 1A est une configuration d'imagerie sans lentille, aucune optique de formation d'image n'étant interposée entre le support résonant 15 et le capteur d'image 30. Il s'agit d'une configuration peu coûteuse et compacte.

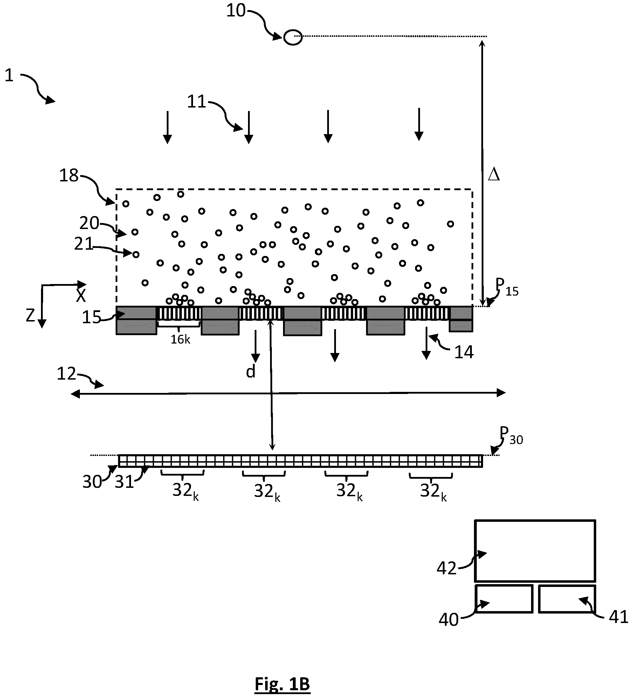

De façon alternative, comme représenté sur la figure 1B, un système optique 12, par exemple une lentille ou un objectif infra-rouge, est disposé entre le support résonant 15 et le capteur d'image 30. Le système optique 12 permet un couplage optique de chaque cristal photonique $16_k$ avec un groupe de pixels $32_k$. Un tel système optique 12 permet de conjuguer chaque réseau diffraction $16_k$ avec un groupe de pixel $32_k$.

La source de lumière est disposée à une distance $\Delta$ du support résonant, de telle sorte que plusieurs cristaux photoniques sont simultanément illuminés par la source de lumière. Ainsi, au moins 3, et de préférence au moins 5 ou 10 cristaux photoniques sont simultanément illuminés par la source de lumière. L'illumination du support résonant est de préférence étendue, au sens où la surface éclairée est de préférence supérieure à 1 mm², voire 1 cm². La surface illuminée peut correspondre au champ d'observation du capteur d'image 30. Selon la configuration sans lentille, décrite en lien avec la figure 1A, la surface illuminée correspond à la surface du capteur d'image, soit de l'ordre de 35 mm².

Le dispositif 1 comporte également une unité de traitement 40, par exemple un microprocesseur, configurée pour traiter et/ou afficher des images acquises par le capteur d'image 30. L'unité de traitement peut être reliée à une mémoire 41, comportant des instructions pour la mise en oeuvre d'algorithmes de traitement d'image. L'unité de traitement 40 est de préférence reliée à un écran 42.

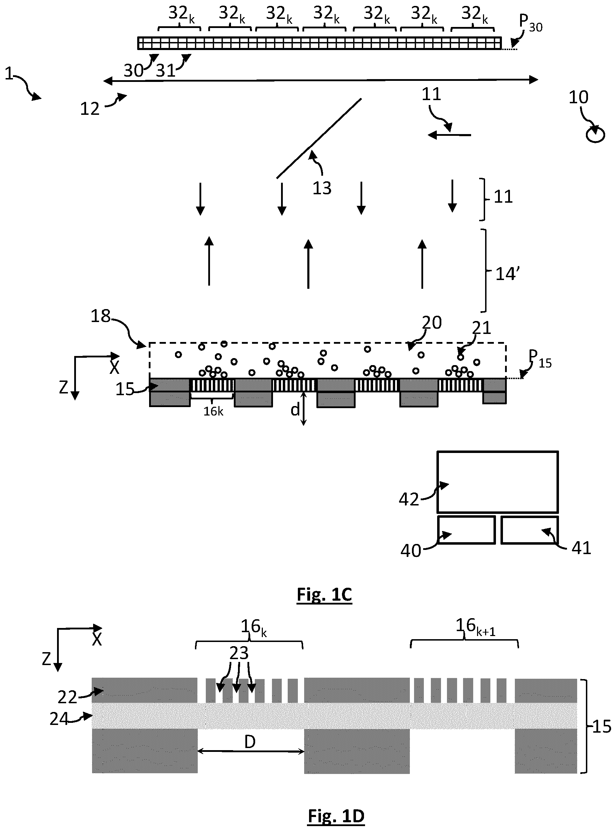

Les configurations schématisées sur les figures 1A et 1B sont des configurations en transmission, selon lesquels le support résonant 15 est interposé entre la source de lumière 10 et le capteur d'image 30. Ainsi, le capteur d'image 30 détecte une onde lumineuse 14 transmise par le support résonant 15. Par transmise, on entend se propageant dans le même sens que l'onde lumineuse incidente 11. Selon une autre configuration, illustrée sur la figure 1C, le plan de support $P_{15}$ sépare l'espace en deux demi-espaces. Le capteur d'image 30 se trouve dans le même demi-espace que la source de lumière 10. Dans l'exemple représenté sur la figure 1C, une lame semi-réfléchissante 13 réfléchit l'onde lumineuse 11, émise par la source de lumière 10, vers l'échantillon 20, et transmet une onde lumineuse 14', réfléchie par le support résonant 15, vers le capteur d'image 30. Une telle configuration est usuellement désignée par le terme "en réflexion". Un système optique 12 permet un couplage optique de chaque cristal photonique $16_k$ avec un groupe de pixels $32_k$ du capteur d'image 30, comme précédemment décrit.

La figure 1D montre une coupe transversale, selon un plan perpendiculaire au plan de support $P_{15}$,

d'un détail du support résonant 15. Chaque cristal photonique $16_k$, $16_{k+1}$ est formé par des trous 23 formés dans une couche mince 22, et débouchant à la surface de cette dernière. La couche mince 22 peut être réalisée dans un matériau diélectrique ou semi-conducteur. Les trous 23 sont agencés selon un motif périodique, de préférence bidimensionnel. Lors de l'utilisation du support résonant, les trous 23 sont destinés à être remplis par l'échantillon 20. Il est préférable que la couche mince 22 présente un indice de réfraction éloigné de l'indice de réfraction de l'échantillon, de façon à obtenir un contraste d'indice élevé entre l'échantillon 20, remplissant les trous 23, et la couche mince 22. De préférence, l'écart d'indice de réfraction entre l'échantillon et le matériau formant la couche mince 22 est supérieur à 0.1, voire à 0.5. Ainsi, l'indice de réfraction de la couche mince 22 est de préférence supérieur à 2, et encore de préférence supérieur à 3. Par exemple, la couche mince peut être en silicium (n = 3.48), ou en nitrure de silicium $Si_3N_4$ (n = 2) ou en oxyde de titane ($TiO_2$). Lorsque la bande spectrale d'illumination s'étend au-delà de 5 $\mu m$, la couche mince 22 peut être comprendre du germanium. Elle peut par exemple être constituée d'un mélange silicium/germanium ou d'un chalcogénure.

Ainsi, la couche mince 22 comporte plusieurs cristaux photoniques résonants $16_k$, séparés les uns des autres, présentant chacun une longueur d'onde de résonance $\lambda_k$ en transmission ou en réflexion. L'épaisseur de la couche mince 22 est ajustée en fonction de la bande spectrale d'illumination. Elle est de préférence comprise entre 50 nm à quelques $\mu m$. Lorsque la bande spectrale d'illumination $\Delta\lambda$ s'étend au-delà de 5 $\mu m$, l'épaisseur de la couche mince peut par exemple atteindre 1.5 $\mu m$ à 3 $\mu m$. Les trous 23 s'étendent à travers la couche mince 22, autour d'un axe perpendiculaire au plan du support. Les trous 23 peuvent en particulier s'étendre autour d'un axe parallèle à l'axe de propagation Z.

Dans le plan du support $P_{15}$, les cristaux photoniques $16_k$ présentent une diagonale ou un diamètre compris entre 10 $\mu m$ et 500 $\mu m$, par exemple 100 $\mu m$. Chaque cristal photonique est porté par une membrane transparente ou translucide, formée par une couche 24, qui peut être formée de silicium. La fabrication des cristaux photoniques est décrite par la suite, en lien avec les figures 6A à 6M.

Les propriétés spectrales de transmission et de réflexion de la lumière des cristaux photoniques peuvent être déterminées à l'aide de simulations effectuées par des codes de calcul. En effet, les propriétés de propagation de la lumière dans les cristaux photoniques découlent de leur arrangement périodique spécifique. Ces propriétés de propagation sont aisément modélisées, par l'homme du métier, sur la base des équations spatio-temporelles de Maxwell. Dans la suite de cette description, les modélisations sont réalisées à l'aide du logiciel Rsoft, mettant en oeuvre une méthode de type RCWA.

Par cristal photonique, on entend une structure, dont l'indice de réfraction varie périodiquement à l'échelle de la longueur d'onde, dans une ou plusieurs directions. Dans les exemples décrits dans cette description, les cristaux photoniques sont bidimensionnels, ce qui constitue une configuration préférée. L'invention tire alors profit du développement de techniques de micro structuration des matériaux diélectriques, semi-conducteurs, ou métalliques, permettant un contrôle de l'interaction des ondes électromagnétiques dans des structures tridimensionnelles basées sur l'agencement de matériaux de différents indices.

Chaque cristal photonique $16_k$ transmet (ou réfléchit) la lumière selon une fonction spectrale de transmission (ou de réflexion), décrivant une évolution d'une intensité de lumière transmise (ou réfléchie) par le cristal photonique, en fonction de la longueur d'onde. L'exploitation de la résonance de Fano permet de concevoir des cristaux photoniques résonants compacts, pouvant être illuminés collectivement par une onde lumineuse d'illumination, selon une incidence normale. Cela permet d'illuminer simultanément, de façon simple, des cristaux photoniques répartis selon une ou deux dimensions. La fonction spectrale de transmission de chaque cristal photonique présente un maximum, à une longueur d'onde de résonance en transmission. De façon analogue, la fonction spectrale de réflexion présente un maximum, à une longueur de résonance en réflexion.

La fonction spectrale de transmission ou de réflexion, et en particulier les longueurs d'onde de résonance en transmission ou en réflexion, dépendent tout d'abord de la structure de chaque cristal photonique, c'est-à-dire de la taille et de l'arrangement spatial des trous 23 réalisés dans la couche mince 22, pour former le cristal photonique $16_k$. En réflexion ou en transmission, la longueur d'onde de résonance $\lambda_k$ dépend également du contraste d'indice de réfraction entre la couche mince 22 et l'échantillon, au niveau des trous 23. La longueur d'onde de résonance dépend également de l'épaisseur de la couche mince 22. Elle dépend également de l'indice de réfraction et de l'épaisseur de la couche transparente 24.

Les figures 2A à 2H illustrent le principe d'un premier mode de réalisation de l'invention. Selon ce mode de réalisation, l'échantillon est liquide. Il s'étend au contact du support 15, et notamment au contact des cristaux photoniques $16_k$. On se place dans cet exemple, selon une configuration en transmission, telle que décrite sur la figure 1A. Sur la figure 2A, on a représenté le support résonant 15, ainsi que des cristaux photoniques $16_k$ répartis sur le support résonant. Le capteur d'image 30 s'étend parallèlement au support résonant. On a également représenté des groupes de pixels $32_k$, chaque groupe de pixels étant optiquement couplé à un cristal photonique $16_k$. Chaque groupe de pixels $32_k$ comporte au moins un pixel. Le couplage optique d'un groupe de pixels avec un cristal photonique peut être établi, en imagerie sans lentille (cf. figure 1A), en minimisant la distance d entre le capteur d'image 30 et le support résonant 15. Lorsqu'on utilise un système optique 12, le couplage est effectué par le système optique (cf. figure 1B ou figure 1C), ce dernier conjuguant chaque groupe de pixels $32_k$ à un cristal photonique.

Préalablement à la mise en contact avec l'échantillon, le support résonant 15 a fait l'objet d'une fonctionnalisation de surface, au niveau du plan du support $P_{15}$, de telle sorte que chaque cristal photonique est apte à capturer un analyte prédéterminé. La fonctionnalisation de surface est une notion connue de l'homme du métier. Elle consiste à ajouter une fonction spécifique sur la surface à fonctionnaliser, par nanostructuration, ou par le dépôt d'un revêtement, ou par l'adsorption ou le greffage de molécules aux propriétés spécifiques. Dans le cas présent, la fonctionnalisation de surface confère, sur chaque cristal photonique, une propriété de capture sélective d'un analyte. La capture de l'analyte peut être obtenue par établissement d'une liaison covalente, hydrogène ou électrostatique avec l'analyte et/ou d'un greffage de l'analyte avec un ligand disposé sur la surface de capture fonctionnalisée. Suite à la fonctionnalisation, le plan de support $P_{15}$ est également un plan de support, fonctionnalisé pour capturer un ou plusieurs analytes.

Lorsque le support résonant est mis au contact de l'échantillon, l'échantillon remplit les trous 23 de chaque cristal photonique $16_k$. Les propriétés spectrales de transmission (ou de réflexion) de la lumière de chaque cristal photonique $16_k$ sont alors gouvernées par la structure de chaque cristal photonique, en particulier la taille et la répartition des trous 23, ainsi que les indices de réfraction respectifs de l'échantillon 20 et de la couche mince 22.

Sur la figure 2B, on a représenté les cristaux photoniques $16_k$ adressant un même analyte, c'est-à-dire configurés pour capturer un même analyte. Ils sont alignés selon des lignes, parallèlement à l'axe longitudinal X.

Du fait de la fonctionnalisation de surface, lorsque l'analyte recherché est présent dans l'échantillon, la concentration d'analyte, capturée par le support, augmente après que ce dernier a été mis en contact avec l'échantillon. Il en résulte une variation d'indice locale de l'échantillon, à l'interface entre l'échantillon et le support fonctionnalisé. Sous l'effet d'une telle variation d'indice, les propriétés spectrales de transmission (ou de réflexion) de chaque cristal photonique fonctionnalisé évoluent, et en particulier la longueur d'onde de résonance des cristaux photonique.

Un aspect remarquable de l'invention est que les cristaux photoniques sont dimensionnés de telle sorte que :

- les longueurs d'onde de résonance respectives de cristaux photoniques, et notamment des cristaux photoniques adressant un même analyte, sont différentes les unes des autres;
- le décalage spectral entre deux longueurs d'onde de résonance de deux cristaux photoniques adjacents est fin et maîtrisé.

L'ensemble des longueurs d'onde de résonance des cristaux photoniques adressant un même analyte s'étendent entre une longueur d'onde de résonance minimale $\lambda_{r,min}$ et une longueur d'onde de résonance maximale $\lambda_{r,max}$. Ces dernières délimitent une bande spectrale de résonance $\Delta\lambda_r$. Il est nécessaire que la bande spectrale d'illumination $\Delta\lambda$ de la source de lumière soit, au moins en partie, incluse dans la bande spectrale de résonance $\Delta\lambda_r$. La bande spectrale d'illumination $\Delta\lambda$ peut être confondue avec la bande spectrale de résonance $\Delta\lambda_r$. Elle peut être plus large ou plus étroite que la bande spectrale de résonance $\Delta\lambda_r$. Sur la figure 2C, on a représenté la bande spectrale d'illumination $\Delta\lambda$, la bande spectrale de résonance $\Delta\lambda_r$ ainsi que les longueurs d'onde de résonance $\lambda_{k=1},...\lambda_k,...\lambda_{k=k}$ respectives des cristaux photoniques $16_{k=1},...16_k,... 16_{k=k}$.

Dans la bande spectrale de résonance $\Delta\lambda_r$, définie par les cristaux photoniques du support, l'intensité de l'onde lumineuse 11 émise par la source de lumière 10 n'est pas constante. Dans la bande spectrale de résonance $\Delta\lambda_r$, l'intensité de l'onde lumineuse 11 est variable, et suit une fonction spectrale d'illumination $f$. La fonction spectrale d'illumination $f$ définit l'intensité de l'onde lumineuse incidente 11 dans différentes longueurs d'ondes de la bande spectrale de résonance, de telle sorte que :

$$I(\lambda) = f(\lambda)$$

où :

- $\lambda$ est une longueur d'onde de la bande spectrale de résonance $\Delta\lambda_r$;
- $I(\lambda)$ est l'intensité de l'onde d'illumination 11, ou intensité d'illumination, à la longueur d'onde $\lambda$.

Il est important que la fonction d'illumination $f$ ne soit pas constante, c'est-à-dire que l'intensité de l'onde d'illumination ne soit pas uniforme dans la bande spectrale de résonance $\Delta\lambda_r$. La fonction d'illumination f peut alors être monotone dans la bande spectrale d'illumination, en étant par exemple croissante ou décroissante. Elle peut également être croissante (respectivement décroissante) jusqu'à un extremum puis être décroissante (respectivement croissante) à partir de l'extremum. Lorsque la source de lumière est monochromatique, la fonction d'illumination forme un pic dans la bande spectrale de résonance $\Delta\lambda_r$.

Dans le mode de réalisation préféré, deux cristaux photoniques adjacents $16_k$, $16_{k+1}$, ont des longueurs d'onde de résonance décalées d'un décalage spectral $d\lambda_k$ connu. Le décalage spectral $d\lambda_k$ conditionne la résolution spectrale du procédé. En valeur absolue, le décalage spectral $d\lambda_k$ est de préférence inférieur à 10 nm, et encore de préférence inférieur à 5 nm, voire à 2 nm.

Il correspond à un pas spectral de discrétisation, selon lequel l'onde lumineuse d'illumination 11 est discrétisée, comme décrit en lien avec la figure 2G. Des structures de cristaux photoniques permettant d'obtenir un tel décalage sont décrites par la suite.

Lors de la capture de l'analyte, la longueur d'onde de résonance de chaque cristal photonique varie, en passant d'une valeur $\lambda_{ref,k}$, en l'absence d'analyte, à une valeur $\lambda_k$, en présence d'analyte, avec $\lambda_k = \lambda_{ref,k} + \delta\lambda$ (1). On note que la variation de longueur d'onde de résonance $\delta\lambda$ est la même pour les cristaux photoniques adressant un même analyte. Autrement dit, la sensibilité de la longueur d'onde de résonance vis-à-vis des variations d'indice est la même pour les différents cristaux photoniques.

Le changement de la longueur d'onde de résonance $\delta\lambda$ est consécutif à la capture de l'analyte, qui se traduit généralement par une augmentation de l'indice au niveau de l'interface entre le support résonant et l'échantillon. L'augmentation de l'indice entraîne une variation de la longueur d'onde de résonance de chaque cristal photonique.

Ainsi, l'invention est basée sur une mesure d'une variation de la longueur d'onde de résonance $\delta\lambda$ sous l'effet de la capture de l'analyte par les cristaux photoniques, adressant un même analyte.

La variation $\delta\lambda$ de la longueur d'onde de résonance est observée en prenant en compte une configuration de référence, dans laquelle la quantité d'analyte capturée est connue. De préférence, dans la configuration de référence, la quantité d'analyte capturée par chaque cristal photonique est nulle. C'est ce qui sera considéré dans la suite de la description. De façon alternative, on peut prévoir un mode de réalisation dans lequel dans la configuration de référence correspond à une quantité capturée d'analyte connue.

La précision avec laquelle la variation $\delta\lambda$ de la longueur d'onde de résonance est estimée dépend du décalage spectral $d\lambda_k$ entre deux cristaux photoniques adjacents. Plus le décalage spectral $d\lambda_k$ est faible, meilleure est la résolution avec laquelle on estime la variation $\delta\lambda$.

La variation de la longueur d'onde de résonance $\delta\lambda$ est déterminée en comparant une image de référence $I_{ref}$ du support résonant, dans la configuration de référence, avec une image I du support résonant formée après capture de l'analyte. L'image I du support, après capture, est appelée image de mesure.

Sur la figure 2C, on a représenté une fonction spectrale d'illumination $f$, précédemment évoquée. L'axe des ordonnées représente l'intensité $I(\lambda)$ de l'onde lumineuse d'illumination 11 en fonction de la longueur d'onde $\lambda$. Dans le cas présent, la fonction spectrale d'illumination comporte un maximum, compris entre les bornes $\lambda_{r,min}$, $\lambda_{r,max}$ de la bande spectrale de résonance $\Delta\lambda_r$. De façon alternative, la fonction spectrale d'illumination f peut comporter un minimum dans la bande spectrale de résonance $\Delta\lambda_r$. Qu'il s'agisse d'un minimum ou d'un maximum, l'extremum est de préférence compris au milieu de la bande spectrale de résonance $\Delta\lambda_r$. De préférence, l'extremum est situé entre le milieu $\Delta\lambda_r/2$ de la bande spectrale de résonance $\Delta\lambda_r$ la longueur d'onde maximale $\lambda_{r,max}$.

La figure 2D montre les intensités détectées par chaque région d'intérêt $ROI_k$ d'une image $I_{ref}$ acquise par le capteur d'image, dans la configuration de référence, en l'absence de capture d'analyte. Chaque région d'intérêt $ROI_k$ de l'image correspond à un groupe de pixels $32_k$ optiquement couplée à un cristal photonique $16_k$. Ainsi, chaque région d'intérêt $ROI_k$ est représentative d'une intensité lumineuse transmise par chaque cristal photonique $16_k$, à la longueur d'onde de résonance $\lambda_{ref,k}$ de ce dernier.

Les régions d'intérêt $ROI_k$ sont distinctes les unes des autres, et alignées parallèlement aux cristaux photoniques $16_k$. Sur les figures 2D à 2F, les intensités sont représentées en niveau de gris, le niveau de gris le plus sombre correspondant à une valeur maximale d'intensité.

La figure 2E montre les intensités de chaque région d'intérêt $ROI_k$ d'une image, acquise par le capteur d'image, dans la configuration de mesure, après capture de l'analyte par les cristaux photoniques. Chaque région d'intérêt $ROI_k$ est représentative d'une intensité lumineuse transmise par chaque cristal photonique $16_k$, à la longueur d'onde de résonance $\lambda_k$ de ce dernier. Sous l'effet de la capture d'un analyte, la longueur d'onde de résonance $\lambda_k$ est différente de la longueur d'onde de résonance $\lambda_{ref,k}$ avec $\lambda_k = \lambda_{ref,k} + \delta\lambda$.

La comparaison entre l'image de mesure I, représentée sur la figure 2E, et l'image de référence $I_{ref}$, représentée sur la figure 2D, montre l'effet de variation de la longueur d'onde de résonance de chaque cristal photonique sous l'effet de la capture d'analyte.

A partir de l'image de mesure et de l'image de référence, on peut former un profil d'intensité, représentatif d'une distribution spatiale de l'intensité de chaque région d'intérêt $ROI_k$ le long de l'axe longitudinal X. Sur la figure 2G, on a représenté un profil de référence, en pointillés, formé à partir de l'image de référence, ainsi qu'un profil de mesure, en traits pleins, formé à partir de l'image de mesure. Le recours à de tels profils facilite la comparaison des deux images I et $I_{ref}$ et l'estimation de la variation $\delta\lambda$ de la longueur d'onde de résonance des cristaux photoniques sous l'effet de la capture d'analyte. Dans la représentation de la figure 2G, chaque profil est un profil interpolé à partir des valeurs discrètes des intensités des différentes régions d'intérêt $ROI_k$ de l'image considérée.

Compte tenu de l'alignement des cristaux photoniques selon une même ligne X, et du décalage spectral fin $d\lambda_k$ entre deux cristaux photoniques adjacents, chaque profil prend approximativement la même forme que la fonction spectrale d'illumination. Ainsi, le support résonant 15 permet une conversion d'une information spectrale en une information spatiale. Il agit de la même façon qu'un spectromètre. L'information spatiale correspond à une position, selon l'axe X, de chaque région d'intérêt $ROI_k$. Une variation spectrale $\delta\lambda$, en l'occurrence la variation de la longueur d'onde de résonance affectant chaque cristal photonique, se traduit par un décalage spatial $\Delta x$ du profil, entre l'image de référence et l'image de mesure. Comme le décalage spectral $d\lambda_k$ entre deux cristaux photoniques adjacents est maîtrisé, la variation de la longueur d'onde de résonance $\delta\lambda$ peut être estimée, selon l'expression :

$$\delta\lambda = \sum_{k}^{k+\Delta k} d\lambda_k \quad (2)$$

où :

- $\Delta k$ correspond à la variation spatiale, obtenue par une comparaison de l'image de mesure et de l'image de référence, et représentant le nombre de régions d'intérêt $32_k$ formant la variation spatiale $\Delta x$ observée ;

- $\sum_{k}^{k+\Delta k} d\lambda_k$ correspond à la somme des décalages spectraux entre les cristaux photoniques respectivement associées aux régions d'intérêt formant la variation spatiale $\Delta x$ observée.

De préférence, le décalage spectral $d\lambda_k$ entre deux cristaux photoniques adjacents est considéré comme constant et égal à $d\lambda$. Dans ce cas, l'expression précédente devient :

$$\delta\lambda = \Delta k \times d\lambda \quad (3)$$

On comprend ici l'intérêt de recourir à une fonction spectrale d'illumination f non uniforme. Cela facilite une comparaison des profils d'intensités respectivement dans la configuration de référence et dans la configuration de mesure, de façon à estimer le nombre $\Delta k$ de régions d'intérêt $ROI_k$ selon lesquelles le profil d'intensité est décalé entre la configuration de référence et la configuration de mesure. Dans l'exemple représenté sur les figures 2D et 2E, $\Delta k = 3$. Le décalage $d\lambda$ est connu et est lié à la géométrie des cristaux photoniques respectivement associés à chaque région d'intérêt, comme décrit dans la suite de la description.

Contrairement à certains dispositifs de l'art antérieur, nécessitant le recours à un spectromètre, l'invention reporte la fonction de séparation spectrale sur le support résonant 15. Cela permet l'utilisation d'un simple capteur d'image, nettement moins onéreux et complexe à mettre en oeuvre.

Selon un mode de réalisation, la source de lumière est monochromatique, et peut être accordable. La bande spectrale d'illumination peut alors être inférieure ou égale au décalage spectral $d\lambda_k$ de longueur d'onde de résonance de deux cristaux photoniques adjacents. Afin de pouvoir estimer la variation $\delta\lambda$ de longueur d'onde de résonance sous l'effet de la capture de l'analyte, la bande spectrale d'illumination correspond alors à une longueur d'onde de résonance d'un seul cristal photonique dans la configuration de référence, c'est-à-dire en l'absence de capture d'analyte, et dans la configuration de mesure.

La source de lumière peut être monochromatique et accordable, de façon à ce que la bande spectrale d'illumination puisse être modifiée.

L'image de référence peut être une image de l'échantillon acquise avant la capture. Dans ce cas, l'image de référence est formée à un instant initial, auquel on considère que la capture de l'analyte par le support est négligeable. Il peut par exemples s'agir d'un instant proche de la mise en contact du support avec l'échantillon. L'image de mesure est alors acquise postérieurement à l'image de référence

De façon alternative, l'image de référence est une image obtenue avec un support de référence, considéré comme représentatif du support mis en contact avec l'échantillon. Le support de référence est alors mis en contact avec un échantillon de référence, considéré comme représentatif de l'échantillon analysé. L'image de référence est mémorisée. Un tel mode de réalisation suppose une bonne reproductibilité dans la fabrication des supports.

Ainsi, l'image de référence, prise en compte pour estimer la variation de longueur d'onde de résonance, peut être :

- acquise par le capteur d'image, préalablement à l'acquisition de l'image de mesure;
- soit obtenue en utilisant un autre support, puis mémorisée ;
- soit acquise par le capteur d'image, simultanément à l'image de mesure, en utilisant le même support de capture, l'image de référence correspondant à l'image de cristaux photoniques configurés pour ne pas capturer l'analyte. Il s'agit par exemple de cristaux photoniques non fonctionnalisés. Dans ce cas, une partie de l'image acquise par le capteur d'image forme l'image de mesure : cela correspond aux régions d'intérêt de l'image acquise représentant les cristaux photoniques ayant capturé l'analyte, ou, plus généralement, étant en contact avec l'analyte. Une autre partie de l'image acquise par le capteur d'image forme l'image de référence : elle correpond aux régions aux régions d'intérêt de l'image acquise représentant les cristaux photoniques n'ayant capturé l'analyte, ou plus généralement n'étant pas en contact avec l'analyte. Par exemple, les cristaux photoniques fonctionnalisés pour capturer l'analyte sont alignés selon une première ligne, tandis que les cristaux photoniques n'étant pas configurés pour capturer l'analyte sont alignés selon une deuxième ligne, les deux lignes étant parallèles l'une à l'autre. L'image de la première ligne forme l'image de mesure, tandis que l'image de la deuxième ligne forme l'image de référence. Ainsi, à partir d'une même image acquise par le capteur d'image, on peut obtenir l'image de mesure et l'image de référence.

Quel que soit le mode de réalisation, l'image de référence est formée en illuminant le support ou le support de référence selon une bande spectrale d'illumination $\Delta\lambda$ et une fonction spectrale d'illumination $f$ égales à celles mises en oeuvre lors de l'acquisition de l'image de mesure. Autrement dit, lors de l'obtention de l'image de référence et de l'image de mesure, les conditions d'illumination du support utilisé sont les mêmes.

Sur la figure 2F, on a représenté une image de mesure, dans laquelle la quantité d'analyte capturée par les cristaux photoniques est supérieure à celle correspondant à l'image de la figure 2E. Il en résulte une variation d'indice plus importante au niveau de l'interface entre les cristaux photoniques et l'échantillon, ce qui entraîne une variation plus importante de la longueur d'onde de résonance $\delta\lambda$'. Sur cette image, chaque région d'intérêt $ROI_k$ est représentative de l'intensité transmise par le cristal photonique $16_k$ auquel elle est associée, dans une longueur d'onde de résonance $\lambda'_k$ de ce dernier, avec $\lambda'_k = \lambda_{ref,k} + \delta\lambda'$. Sur la figure 2G, le profil correspondant est en traits mixtes.

Le procédé permet de détecter une présence de l'analyte dans l'échantillon, ce qui correspond à l'observation d'une variation $\delta\lambda$ non nulle de la longueur d'onde de résonance. Il permet également d'estimer une quantité d'analyte capturée par le support résonant, avec une précision dépendant du nombre de cristaux photoniques et du décalage spectral $d\lambda_k$ de la longueur de résonance de deux cristaux photoniques adjacents.

A partir de la quantité d'analyte capturée par le support, il est ensuite possible d'estimer une quantité d'analyte dans l'échantillon, cette dernière pouvant être par exemple exprimée sous la forme d'une concentration. Un étalonnage, utilisant des échantillons dont la concentration en analyte est connue, permet d'obtenir une fonction d'étalonnage, reliant la quantité d'analyte capturée par le support à la concentration d'analyte initialement présente dans l'échantillon.

La figure 2H résume les principales étapes du procédé.

Etape 100 : mise au contact de l'échantillon avec le support résonant.

Etape 110 : illumination de l'échantillon dans la bande spectrale d'illumination $\Delta\lambda$, selon la fonction spectrale d'illumination $f$.

Etape 120 : acquisition d'une image de mesure I du support résonant.

Etape 130 : prise en compte d'une image de référence $I_{ref}$. l'image de référence pouvant être une image du support acquise juste après l'étape 110, préalablement à l'acquisition de l'image de mesure, ce qui forme l'étape optionnelle 115.

Etape 140 : comparaison de l'image de mesure I avec l'image de référence $I_{ref}$, de façon à estimer une variation de la longueur d'onde de résonance $\delta\lambda$ des cristaux photoniques. Il s'agit notamment de déterminer le nombre de cristaux photoniques (ou le nombre de régions d'intérêt) correspondant à la variation de la longueur d'onde de résonance $\delta\lambda$. Connaissant le décalage spectral $d\lambda_k$ entre les longueurs d'onde de résonance des cristaux photoniques, on peut ainsi déterminer la variation de la longueur d'onde de résonance $\delta\lambda$.

Etape 150 : à partir de la comparaison, détermination de la présence, dans l'échantillon, de l'analyte adressé par les cristaux photoniques, et éventuellement estimation d'une quantité d'analyte dans l'échantillon.

Sur l'exemple représenté sur les figures 3A à 3C, le support résonant comporte des cristaux photoniques $16_k$ répartis selon J lignes $X_1...X_j...X_J$. Les cristaux photoniques d'une même ligne $X_j$ sont configurés pour adresser un même analyte. Ainsi, les cristaux photoniques de la première ligne $X_1$ adressent un premier analyte, et les cristaux photoniques de la $j^{ième}$ ligne $X_j$ adressent un $j^{ième}$ analyte. L'indice j est un entier naturel tel que $1 \le j \le J$

Comme décrit en lien avec le premier mode de réalisation, les cristaux photoniques sont répartis selon des colonnes $Y_1, Y_2, Y_k, Y_K$, de telle sorte que les cristaux photoniques appartenant à deux colonnes adjacentes $Y_k$ présentent, dans la configuration de référence, une même longueur d'onde de résonance $\lambda_{k,ref}$.

Cette configuration, dite bidimensionnelle, correspond à l'ajout d'une dimension par rapport au mode de réalisation décrit en lien avec les figures 2A à 2H. La dimension ajoutée correspond au type d'analyte. Une telle configuration suppose que chaque ligne ait fait l'objet d'une fonctionnalisation différente l'une de l'autre, de telle sorte que chaque analyte puisse être capturé par une ligne, et de préférence par une seule ligne. Ainsi, la première ligne $X_1$ est fonctionnalisée de façon à capturer un premier analyte. La $j^{ième}$ ligne $X_j$ est fonctionnalisée de façon à capturer un $j^{ième}$ analyte, de préférence différents des analytes adressés par les lignes de rang inférieur.

On note que le dispositif permet d'illuminer simultanément une pluralité de cristaux photoniques, ce qui permet d'obtenir une information exploitable, relative à différents analytes, à partir d'une même image acquise à l'aide d'un simple capteur d'image.

Selon ce mode de réalisation, les étapes 100 à 150, décrites en lien avec la figure 2H, sont répétées pour chaque ligne $X_j$ du support. Les figures 3B et 3C schématisent respectivement une image de mesure et une image de référence. Sur ces figures, la source de lumière est monochromatique. Ainsi, seul le cristal photonique dont la longueur d'onde de résonance correspond à la bande spectrale d'illumination forme une tâche de forte intensité dans la région d'intérêt qui lui est associée sur l'image acquise par le capteur d'image.

Sur l'image de référence (figure 3C), les régions d'intérêt correspondant, sur chaque ligne, à la longueur d'onde d'illumination sont alignées. La comparaison de l'image de mesure (figure 3B) et de l'image de référence montre une variation importante de la longueur d'onde de résonance des cristaux photoniques de la quatrième ligne, moindre sur la première ligne et la 3ème ligne, et nulle sur la 2ème ligne. Cela permet de conclure à la présence du premier analyte, du 3ème analyte et du 4ème analyte dans l'échantillon, ainsi qu'à l'absence du deuxième analyte. Moyennant des étalonnages effectués pour chaque analyte, chaque variation en longueur d'onde de résonance permet une estimation d'une concentration des analytes considérés comme présents dans l'échantillon.

Selon un tel mode de réalisation, le dispositif permet d'effectuer simultanément une détection de la présence de différents analytes dans l'échantillon, et d'en estimer la concentration.

La figure 4A montre différentes fonctions spectrale de transmission modélisées de différents cristaux photoniques, chaque cristal photonique modélisé présentant différentes caractéristiques géométriques. Sur cette figure, l'axe des abscisses correspond à la longueur d'onde, exprimée en $\mu$m, tandis que l'axe des ordonnées représente l'intensité de la lumière transmise.

Les modélisations de la figure 4A ont été réalisées selon un mode préférentiel de réalisation, selon lequel chaque cristal photonique $16_k$ est agencé selon une structure telle que représentée sur la figure 4B. Une telle structure, dite à double période, comporte :

- des premiers trous $23_1$, d'un premier rayon $R_1$, et répartis selon un premier motif périodique $P_1$;
- des deuxièmes trous $23_2$, d'un deuxième rayon $R_2$, strictement inférieur au premier rayon $R_1$, et répartis selon un deuxième motif périodique $P_2$. Le deuxième motif périodique $P_2$ est, dans cet exemple, similaire au premier motif périodique $P_1$, en étant décalé par rapport à ce dernier.

Dans cet exemple le premier motif périodique $P_1$ et le deuxième motif périodique $P_2$ définissent une maille rectangulaire, de période $\alpha$ selon X et $2\alpha$ selon Y, la maille rectangulaire étant reproduite selon deux directions de translation orthogonales. Dans cet exemple, les deux directions de translation correspondent respectivement à l'axe longitudinal X et à l'axe latéral Y. Le premier motif périodique $P_1$ et le deuxième motif périodique $P_2$ sont entrelacés, au sens ou selon une direction de translation, en l'occurrence la direction Y, on observe une alternance entre des lignes de premiers trous $23_1$, parallèles à l'axe longitudinal X, et des lignes de deuxièmes trous $23_2$, également parallèle à l'axe longitudinal X. Dans cet exemple, la période $\alpha_1$ (selon X) du premier motif périodique $P_1$ est égale à la période $\alpha_2$ (selon X) du deuxième motif périodique $P_2$, la période commune des deux motifs étant notée $\alpha$. La valeur de la période est typiquement comprise entre 100 nm et 5 $\mu$m. Dans cet exemple, la période $\alpha$ est supérieure à 1 $\mu$m. D'une façon générale, si $\lambda$ est une longueur d'onde appartenant à la bande spectrale d'illumination $\Delta\lambda$, la période $\alpha$ est comprise entre $\lambda/4$ et $\lambda$.

Un avantage d'une structure résonante en double période est de pouvoir ajuster un décalage spatial $\delta$ entre le premier motif et le deuxième motif. Le décalage spatial $\delta$ correspond à une distance entre les lignes respectives des premiers et des deuxièmes trous. Sur la figure 4B, on a représenté deux structures différentes, correspondant respectivement à deux décalages différents. Le décalage spatial $\delta$ permet de définir la position relative du deuxième motif par rapport au premier motif. Le recours à deux motifs décalés l'un par rapport l'autre permet un ajustement fin de la longueur d'onde de résonance. En effet, la longueur d'onde de résonance dépend de la position relative des premier et deuxième motifs.

On estime qu'une telle structure en double période permet d'obtenir des facteurs de qualité élevés, typiquement de l'ordre de 1000, soit une largeur à mi-hauteur du pic de 1 nm pour une longueur d'onde de résonance de 1000 nm.

Les courbes modélisées sur la figure 4A ont été obtenues en considérant :

- une période $\alpha$ allant de 1.47 $\mu$m à 2.94 $\mu$m ;
- un premier rayon $R_1$ égal 0.4 fois $\alpha$ ;
- un deuxième rayon $R_2$ égal à $0,8 \times R_1$;
- une épaisseur de couche mince de 1.47 $\mu$m.

Le facteur de qualité dépend du rapport $R_2/R_1$. Lorsque $R_2/R_1$ est de l'ordre de 0.6, le facteur de qualité est égal à quelques dizaines. Lorsque $R_2/R_1$ tend vers 1, le facteur de qualité augmente rapidement. Le facteur de qualité peut alors dépasser plusieurs milliers.

D'une façon générale, le premier rayon $R_1$ est inférieur à $\alpha/2$. Le ratio $R_2/R_1$ est de préférence supérieur ou égal à 0.8. La période $\alpha$ peut varier entre 100 nm à 5 $\mu$m, comme précédemment indiqué.

Sur la figure 4C, on a représenté une évolution de la longueur d'onde de résonance (axe des ordonnées, en nm) de différents cristaux photoniques tels que représentés sur la figure 4B. Sur la figure 4C, l'axe des abscisses est un identifiant de chaque cristal photonique considéré. Chaque double flèche recouvre des cristaux photoniques de même période $\alpha$, cette dernière variant entre 288 nm et 304 nm. On observe que la période $\alpha$ influence la longueur d'onde de résonance. Les points englobés par une même période $\alpha$ correspondent à différents décalages spatiaux $\delta$ entre les deux motifs du cristal photonique. Les valeurs de décalage spatial $\delta$ considérées sont respectivement de 0 nm, 16 nm, 23 nm, 28 nm, 33 nm et 37 nm. Lorsque le décalage spatial $\delta$ est égal à 0, la distance entre un deuxième trou et chaque premier trou lui étant adjacent est égale à $\alpha$. On a estimé qu'un décalage spatial $\delta$ de 16 nm induit une variation de la longueur d'onde de résonance de 2 nm. On remarque que le décalage en longueur d'onde (décalage spectral) $d\lambda_k$ de résonance entre deux cristaux photoniques adjacents ne varie pas linéairement avec le décalage spatial $\delta$. La figure 4C adresse des longueurs d'onde de résonance dans le très proche infra-rouge, comprises entre 920 nm et 980 nm. Cependant, ces résultats sont transposables dans d'autres bandes spectrales de l'infra-rouge, et notamment entre 2$\mu$m et 15 $\mu$m. En effet, la gamme spectrale de résonance des cristaux photoniques est directement proportionnelle aux dimensions des cristaux photoniques, à la variation de l'indice de réfraction près. Si l'on multiplie toutes les dimensions mentionnées en lien avec la figure 4C (période, rayons, décalages spatiaux), on obtient des longueurs d'onde de résonance voisines de 9000 nm, soit autour de 9 $\mu$m.

Ainsi, un autre avantage de la structure en double période, telle que précédemment décrite, est de permettre un ajustement de la longueur d'onde de résonance :

- en modifiant la période $\alpha$ des motifs, ce qui conduit à une variation relativement importante de la longueur d'onde de résonance, typiquement 10 nm lorsque la période $\alpha$ varie de 4 nm ;
- en modifiant le décalage spatial $\delta$ des deux motifs, ce qui conduit à une variation plus fine de la longueur d'onde de résonance, typiquement 2 nm pour un décalage spatial $\delta$ de 16 nm, dans l'exemple particulier de la géométrie décrite en lien avec les figures 4B et 4C.

Les valeurs quantitatives données dans le paragraphe précédent ont été obtenues par modélisation.

Les inventeurs ont fabriqué un support résonant de façon à procéder à des essais expérimentaux, dans une bande spectrale comprise entre 920 nm et 980 nm. Les caractéristiques du support résonant sont les suivantes :

- couche mince 22 : silicium - épaisseur 58 nm ;
- diamètre D de chaque cristal photonique : 100 $\mu$m ;
- rayon $R_1$ des premiers trous $23_1$ : $\alpha$ / 3 ;
- rayon $R_2$ des deuxièmes trous $23_2$: 0.9 $R_1$ ;
- période $\alpha$ : variable entre 288 nm et 304 nm, avec des incréments de période $\Delta\alpha$ de 4 nm ;
- décalage spatial du premier motif par rapport au deuxième motif : variable entre 0 nm, 16 nm, 23 nm, 28 nm, 33 nm et 37 nm. Ainsi, pour une même période $\alpha$, on peut obtenir 6 cristaux photoniques, chaque réseau présentant respectivement un décalage spatial $\delta$ choisi parmi 16 nm, 23 nm, 28 nm, 33 nm et 37 nm.

La figure 4D représente une évolution de la réflectance modélisée d'un cristal photonique (axe des ordonnées) en fonction de la longueur d'onde (axe des abscisses). Le cristal photonique modélisé est tel que décrit en lien avec la figure 4B. Ses caractéristiques géométriques suivantes:

- couche mince 22 : silicium - épaisseur 1.47 $\mu$m ;
- rayon $R_1$ des premiers trous $23_1$ : 0.94 $\mu$m ;
- rayon $R_2$ des deuxièmes trous $23_2$: 0.9 $R_1$.

On observe bien une longueur d'onde de résonance, en réflexion, vers 7.8 $\mu$m avec un facteur de qualité de 1000.

Les figures 5A et 5B sont des vues de dessus de deux exemples de cristal photonique, présentant une même période et deux décalages spatiaux différents.

Les principales étapes de fabrication des cristaux photoniques sont décrites ci-dessous, en lien avec les figures 6A à 6M.

La figure 6A est un substrat de type SOI (Silicium sur isolant), comportant une couche supérieure 22 de Si, d'épaisseur 220 nm, s'étendant sur une couche intermédiaire 24 de SiOz, dite couche BOX (acronyme de Buried Oxyde, signifiant oxyde enterré), d'épaisseur 2 $\mu$m, cette dernière s'étendant sur une couche support 25 de Si d'épaisseur 725 $\mu$m.

Afin d'obtenir une couche supérieure 22 de Si présentant l'épaisseur recherchée, cette dernière subit une oxydation thermique, puis attaque chimique à l'acide fluorhydrique pour enlever le SiO$_2$ résultant de façon à obtenir une couche 22 de Si d'épaisseur 58 nm ainsi qu'une couche 22' de SiO$_2$ d'épaisseur 80 nm sur la couche supérieure 22. Cette étape est schématisée sur la figure 6B.

La figure 6C schématise une application d'une résine R de photolithographie selon une épaisseur de 570 nm, sur la couche oxydée 22'. La résine est ensuite exposée à une insolation UV à travers un masque de photolithographie. Suite à l'insolation, la couche oxydée 22' et la couche supérieure 22 font l'objet d'une gravure de type RIE (Reactive Ion Etching), cette étape étant représentée sur la figure 6D. Cette étape permet de former des marques de photolithographie 19, dites marques premières PM, permettant un alignement d'une photolithographie postérieure par rapport aux marques premières. La résine est ensuite retirée, cf. figure 6E.

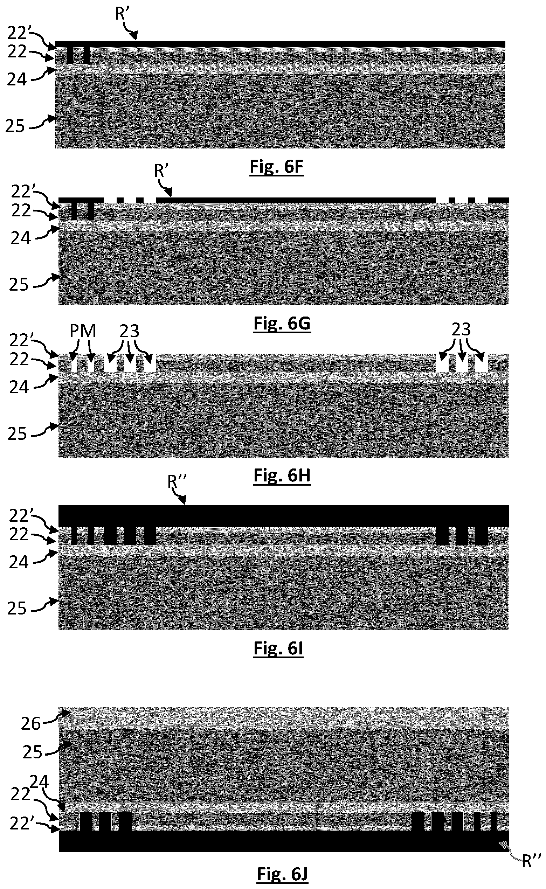

Les étapes représentées sur les figures 6F à 6H visent à former des trous 23 dans la couche supérieure 22, selon des motifs périodiques tels que précédemment décrits, de façon à former les cristaux photoniques $16_k$. Une résine de photolithographie R', d'épaisseur 300 nm, est déposée sur la couche oxydée 22' (cf. figure 6F). La résine de photolithographie comporte un revêtement antiréfléchissant désigné par l'acronyme Barc (Bottom Anti-Reflective Coating). Des zones de gravures sont délimitées, dans la résine R', par une insolation UV à travers un masque (cf. figure 6G). Les trous 23 sont formés à travers la couche oxydée 22' et la couche supérieure 22 par gravure RIE, puis la résine est retirée (cf. figure 6H).

Les étapes représentées sur les figures 6I à 6M sont des étapes de gravure en face arrière du substrat.

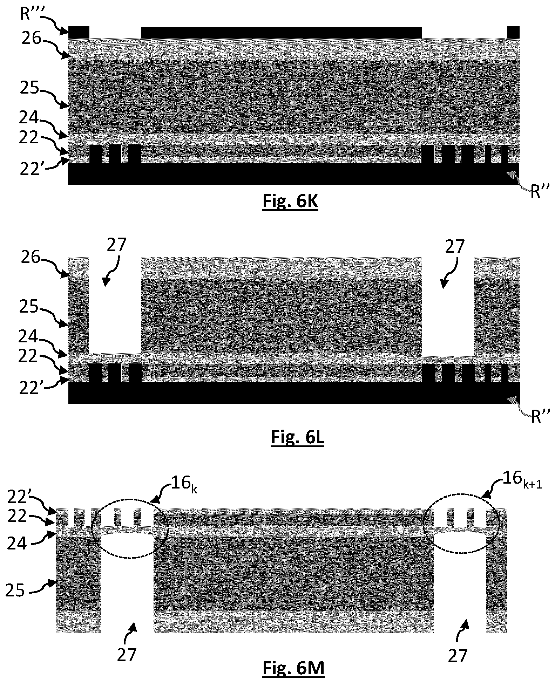

Une résine R" est appliquée sur la couche oxydée 22', l'épaisseur étant de 1 $\mu$m (cf. figure 6I). La résine appliquée permet une protection de la face avant du substrat, de façon à permettre un amincissement de la couche support 25, réduisant l'épaisseur de 725 $\mu$m à 500 $\mu$m. Le substrat est alors retourné et une couche d'oxyde de silicium 26, faisant office de masque dur, est ajoutée sur la couche support (figure 6J). Une résine R''' est appliquée sur la couche 26, selon une épaisseur de 5 $\mu$m (cf. figure 6K). La résine R''' subit une insolation à travers un masque, de façon à délimiter des zones de gravure pour la formation de cavités 27 en face arrière du substrat. Le substrat subit ensuite une gravure (deep RIE) en face arrière, à travers la couche support 25, la couche intermédiaire 24 faisant office de couche d'arrêt de gravure. La figure 6L représente l'étape de gravure en face arrière. Cette étape permet de ménager des cavités en regard des trous 23 pratiqués à travers les couches 22 et 22'. Cette étape permet une formation de cristaux photoniques $16_k$, séparés les uns des autres, et portés par la couche intermédiaire 24, cette dernière formant une membrane en dessous de chaque cristal photonique. Le diamètre ou la diagonale D de chaque membrane peut être compris entre 50 $\mu$m et 500 $\mu$m. Il est par exemple égal à 100 $\mu$m. La résine R" est ensuite retirée (figure 6M).

Dans le procédé de fabrication précédemment décrit, les trous 23 sont formés par photolithographie puis gravure, ce qui permet une fabrication collective de cristaux photoniques sur le support. Un tel procédé permet d'obtenir simultanément un grand nombre de cristaux photoniques, ce qui est favorable d'un point de vue économique. Alternativement, les trous peuvent être formés par un balayage à un faisceau électronique (e-beam), ce qui permet d'obtenir des géométries plus précises, au détriment du coût et de la rapidité de fabrication.

Des essais de caractérisation du support résonant 15 ainsi formé, et plus précisément des cristaux photoniques $16_k$, ont été réalisés. Pour cela, on a disposé une goutte d'eau sur un support résonant 15, et appliqué une lame de verre d'épaisseur 17 $\mu$m pour confiner la goutte d'eau. On a utilisé une source de lumière de type diode électroluminescente, centrée sur 940 nm, la bande spectrale d'illumination s'étendant à $\pm$ 40 nm par rapport à la longueur d'onde centrale de 940 nm. On a ensuite caractérisé la transmission de cristaux photoniques par des essais spectrométrie en transmission.

La figure 7A représente une fonction spectrale de transmission d'un cristal photonique. L'axe des ordonnées correspond au pourcentage de lumière réfléchie par le cristal photonique, l'axe des abscisses correspondant à la longueur d'onde. On observe bien une longueur d'onde de résonance en dessous de 950 nm, qui correspond à une résonance de Fano.

Pour différents cristaux photoniques $16_k$ élaborés, d'autres essais, en réflectométrie, ont permis d'établir une longueur d'onde de résonance. La figure 7B est une comparaison entre les longueurs d'onde de résonance modélisées (points noirs) et expérimentales (points gris). Sur la figure 7B, l'axe des ordonnées correspond à la longueur d'onde (nm) tandis que l'axe des abscisses désigne la référence des cristaux photoniques testés. En dépit de la présence d'un écart, sensiblement constant, entre les longueurs d'onde de résonance modélisées et mesurées, on observe qu'il est possible de prévoir une série de cristaux photoniques, en l'occurrence 32 cristaux photoniques, disposés de façon adjacente, et entre lesquels le décalage spectral de la longueur d'onde de résonance $d\lambda_k$ est en moyenne de l'ordre de 2 nm, entre 880 nm et 940 nm.

Sous réserve de l'ajustement des dimensions des cristaux photoniques, en particulier la période $\alpha$, les rayons $R_1$ et $R_2$, et l'épaisseur de la couche mince 22 dans laquelle les cristaux photoniques sont ménagés, les résultats décrits en lien avec la figure 7B sont transposables dans des bandes spectrales comprises entre 2 $\mu$m et 20 $\mu$m.

Un support résonant comportant de tels cristaux photoniques permet une identification d'une longueur d'onde de résonance dans une bande spectrale relativement étendue, de largeur spectrale typiquement supérieure à 50 nm, et dans cet exemple de largeur spectrale égale à 60 nm. Lorsque les cristaux photoniques sont alignés, comme représenté sur les figures 2A ou 3A, et couplés à un capteur d'image, l'image obtenue permet l'identification du cristal photonique transmettant une lumière d'intensité maximale. Ainsi, comme précédemment indiqué, le dispositif fonctionne de façon analogue à un spectromètre, la fonction de séparation spectrale étant assurée par le support résonant 15.

Selon une configuration avantageuse, représentée sur la figure 8A, formant une variante de la configuration représentée sur la figure 1B, un polariseur amont $17_1$ est disposé entre la source de lumière et l'échantillon, de façon à polariser l'onde lumineuse se propageant vers l'échantillon selon une direction non parallèle aux axes de périodicité des cristaux photoniques. La direction de polarisation du polariseur amont peut par exemple être de 45° par rapport à l'axe Y selon lequel est répété la période de chaque cristal photonique, comme représenté sur la figure 8B. Un polariseur aval $17_2$ est également disposé entre le support résonant et le capteur d'image. La direction de polarisation du polariseur aval est orientée de 90° par rapport à la direction de polarisation du polariseur amont, ce qui permet une détection dite en polarisation croisée. La figure 8B montre, par une ligne en pointillés, les directions de polarisation respectives du polariseur amont $17_1$ et du polariseur aval $17_2$. L'ajout de tels polariseurs permet d'éliminer la majeure partie de la lumière se propageant hors résonance jusqu'au capteur d'image. Cela permet d'augmenter le rapport signal à bruit de l'intensité de la lumière se propageant vers le capteur d'image à une longueur d'onde de résonance.

Le recours à une polarisation croisée, combinant un polariseur amont, en amont de l'échantillon, et un polariseur aval, en aval de l'échantillon, peut être prévu sur les modes de réalisation représentés sur les figures 1A et 1B (configurations en transmission) et 1C (configuration en réflexion).

Les figures 9A à 9C illustrent une mise en oeuvre d'un support tel que précédemment décrit, selon la configuration en polarisation croisée. Sur cette figure, le support résonant est matriciel, tel que décrit en lien avec la figure 3A. Aucune fonctionnalisation n'a été effectuée. Les cristaux photoniques alignés selon une même colonne présentent la même longueur d'onde de résonance. La figure 9A montre une image du support mis en contact avec de l'eau. Cette figure montre la capacité du dispositif à former une image représentative du spectre de l'onde lumineuse d'illumination 11. La figure 9A représente ainsi la fonction spectrale d'illumination f discrétisée selon les différentes longueurs d'onde $\lambda_k$ de résonance des cristaux photoniques $16_k$.

La figure 9B montre une image du support mis en contact avec de l'éthanol. Elle représente également la fonction spectrale d'illumination f discrétisée selon les différentes longueurs d'onde de résonance des cristaux photoniques, ces dernières ayant été décalées sous l'effet de la variation d'indice de l'échantillon. Les figures 9A et 9B illustrent la capacité de cristaux photoniques, tels que précédemment décrits, à convertir une information de nature spectrale en information spatiale, cette dernière pouvant être lue à partir de l'image acquise par le capteur d'image.

Du fait de la variation d'indice entre l'eau et l'éthanol, la longueur d'onde de chaque cristal photonique subit une variation spectrale $\delta\lambda$, en l'occurrence une augmentation, ce qui se traduit par un léger décalage, vers la gauche de l'image, de la fonction spectrale d'illumination discrétisée. La figure 9C montre des profils d'intensité respectivement établis le long d'une ligne de cristaux photoniques de la figure 9A (en gris) et de la figure 9B (en noir). Ces profils permettent d'observer la variation spectrale $\delta\lambda$. Si la figure 9A forme une image de référence, la détermination de la variation spectrale $\delta\lambda$ permet une estimation de la variation d'indice entre l'eau et l'éthanol.

Selon un deuxième mode de réalisation, on exploite la faculté de l'invention à déterminer, à partir d'une image de mesure, une longueur d'onde d'absorption $\lambda_a$ d'un analyte.

Selon ce mode de réalisation, l'échantillon comporte un analyte présentant une bande spectrale d'absorption $\Delta\lambda_a$ se situant dans la bande spectrale de résonance $\Delta\lambda_r$ ainsi que dans la bande spectrale d'illumination $\Delta\lambda$.

Comme représenté sur les figures 1A à 1C, l'échantillon 20 est disposé entre la source de lumière 10 et le support résonant 15. Contrairement au premier mode de réalisation, l'échantillon n'est pas nécessairement au contact du support résonant 15, mais il est de préférence disposé a proximité du support résonant 15. Le capteur d'image peut être disposé selon les configurations de transmission, représentées sur les figures 1A et 1B, et selon la configuration en réflexion, représentée sur la figure 1C.

De même que dans le premier mode de réalisation, le support de capture 15 comporte différents cristaux photoniques $16_k$, chaque cristal photoniques présentant une longueur d'onde de résonance $\lambda_k$ en transmission. De préférence, comme dans le premier mode de réalisation, les cristaux photoniques $16_k$ sont alignés selon une même ligne, par exemple parallèle à l'axe longitudinal X, de telle sorte que la longueur d'onde de résonance $\lambda_k$ augmente (ou diminue) progressivement d'un cristal photonique $16_k$, $16_{k+1}$ à son voisin, le long de l'axe longitudinal X.

Comme représenté sur les figures 10A à 10D, les cristaux photoniques peuvent être agencés parallèlement à une colonne, selon un axe latéral Y sécant de l'axe longitudinal X, les axes longitudinal X et latéral Y étant de préférence perpendiculaires. Selon une telle configuration, les cristaux photoniques d'une même colonne présentent la même longueur d'onde de résonance $\lambda_k$.

Dans cet exemple, la structure des cristaux photoniques $16_k$ est telle que décrite dans le premier mode de réalisation, et plus précisément en lien avec les figures 4B, 4C, 5A et 5B.

Comme précédemment évoqué, les différentes longueurs d'onde de résonance $\lambda_k$ des différents cristaux photoniques définissent une bande spectrale de résonance $\Delta\lambda_r$.

Comme précédemment décrit, l'échantillon peut être un gaz, auquel cas l'analyte est une espèce gazeuse. Le gaz peut être par exemple de l'air, ou un gaz expiré par un être vivant, ou un gaz mis en oeuvre dans un processus industriel.

L'échantillon peut être un solide ou un liquide, auquel cas l'analyte est une molécule. Il est en effet connu que la fonction de transmission spectrale de la lumière par un échantillon varie en fonction de la composition de ce dernier, en raison de la présence de pics d'absorption correspondant à des modes de vibrations de molécules composant l'échantillon. La présence de pics d'absorption est la base des méthodes de spectrométrie vibrationnelle de type spectroscopie infrarouge ou spectrométrie Raman.

Par fonction de transmission $tr(\lambda)$, on entend un ratio entre :

- une intensité $i(\lambda)$, d'une onde lumineuse s'étant propagée à travers l'échantillon 20, et détectée par le capteur d'image 30, à la longueur d'onde $\lambda$ ;
- une intensité, dite intensité de référence $i_{ref}(\lambda)$, d'une onde lumineuse détectée par le capteur d'image, à la même longueur d'onde $\lambda$, en l'absence d'échantillon.

Selon la loi de Beer-Lambert :

$$tr(\lambda) = \frac{i(\lambda)}{i_{ref}(\lambda)} \quad (1)$$

L'absorbance $abs(\lambda)$, à la longueur d'onde $\lambda$, est obtenue selon l'expression :

$$abs(\lambda) = -tr(\lambda) = -ln\left(\frac{i(\lambda)}{i_{ref}(\lambda)}\right) \quad (2)$$

Selon ce mode de réalisation, la fonction spectrale d'illumination f peut être variable dans la bande spectrale de résonance, ou constante dans la bande spectrale de résonance $\Delta\lambda_r$.

Dans les exemples schématisés sur les figures 10A à 10D, la fonction d'illumination *f* est supposée constante dans la bande spectrale de résonance: les cristaux photoniques sont illuminés de façon uniforme. Sur chacune de ces figures, on a représenté des images d'un même support résonant 20. Chaque image comporte des régions d'intérêt $ROI_k$ optiquement couplées à un cristal photonique $16_k$ dont la longueur d'onde de résonance est $\lambda_k$.

La figure 10A correspond à une image de référence, obtenue sans analyte. Les différentes régions d'intérêt comportent un signal d'intensité homogène, car non atténué par un analyte. Chaque ligne représente une intensité spectrale de l'onde lumineuse d'illumination 11, discrétisée selon les différentes longueurs d'onde de résonance $\lambda_k$. Chaque colonne représente des cristaux photoniques présentant la même longueur d'onde de résonance. Ainsi, à chaque colonne sont respectivement associées les longueurs d'onde de résonance $\lambda_{k1}$, $\lambda_{k2}$, $\lambda_{k3}$ et $\lambda_{k4}$.

La figure 10B correspond à une image de mesure acquise en disposant, entre la source de lumière 10 et le support résonant 15, un échantillon comportant un analyte dont la bande spectrale d'absorption $\Delta\lambda_a$ comporte une longueur d'onde d'absorption $\lambda_a$ correspondant à la longueur d'onde de résonance $\lambda_{k1}$. L'absorption de l'onde lumineuse d'illumination 11 se traduit par un assombrissement relatif des régions d'intérêt $ROI_{k1}$, représentant les cristaux photoniques dont la longueur d'onde de résonance est $\lambda_{k1}$.

La figure 10C correspond à une image de mesure acquise en disposant, entre la source de lumière 10 et le support résonant 15, un échantillon comportant un analyte dont la bande spectrale d'absorption $\Delta\lambda_a$ comporte une longueur d'onde d'absorption $\lambda_a$ correspondant à la longueur d'onde de résonance $\lambda_{k3}$. L'absorption de l'onde lumineuse d'illumination 11 se traduit par un assombrissement relatif des régions d'intérêt $ROI_{k3}$, représentant les cristaux photoniques dont la longueur d'onde de résonance est $\lambda_{k3}$.

La figure 10D correspond à une image de mesure acquise en disposant, entre la source de lumière 10 et le support résonant 15, un échantillon comportant des analytes dont la bande spectrale d'absorption $\Delta\lambda_a$ comporte les longueurs d'onde de résonance $\lambda_{k1}$ et $\lambda_{k3}$. L'absorption de l'onde lumineuse d'illumination 11 se traduit par un assombrissement simultané des régions d'intérêt $ROI_{k1}$ et $ROI_{k3}$, représentant les cristaux phoniques dont la longueur d'onde de résonance est $\lambda_{k1}$ et $\lambda_{k3}$.

Les figures 10E et 10F schématisent des profils d'une intensité de la lumière transmise par des cristaux photoniques selon les configurations respectivement illustrées sur les figures 10A et 10D. Sur ces figures, l'axe des ordonnées correspond à une intensité, tandis que l'axe des abscisses représente la position des cristaux photoniques, selon leur longueur d'onde de résonance respective.

Sur les images de mesure, l'intensité des régions d'intérêt correspondant aux cristaux photoniques, dont la longueur d'onde de résonance se situe dans la bande spectrale d'absorption d'un analyte, dépend de l'absorption de l'onde lumineuse d'illumination par l'analyte, exprimée par l'expression (2). L'absorption dépend en particulier d'un coefficient d'absorption de l'analyte, ce dernier variant en fonction de la longueur d'onde, ainsi que de la quantité d'analyte présente dans l'échantillon. La valeur du coefficient d'absorption, aux différentes bandes spectrales de résonance, étant connue, une estimation de l'atténuation permet une estimation de la quantité d'analyte présente dans l'échantillon.

L'image de mesure permet une estimation de l'intensité $i(\lambda_a)$ de l'onde lumineuse s'étant propagée à travers l'échantillon, en présence d'analyte, dans une longueur d'onde d'absorption $\lambda_\alpha$. La longueur d'onde d'absorption est une longueur d'onde de résonance $\lambda_r$ d'un cristal photonique appartenant à la bande spectrale d'absorption $\Delta\lambda_a$. L'intensité de référence $i_{ref}(\lambda_a)$ de l'onde lumineuse s'étant propagée à travers l'échantillon, en l'absence d'analyte, à la longueur d'onde d'absorption, peut être estimée à partir d'une image de référence, acquise en l'absence d'échantillon comportant l'analyte.

De façon alternative, l'intensité de référence $i_{ref}(\lambda_a)$ peut être estimée sur l'image acquise par le capteur d'image, en présence de l'échantillon, à partir d'une région d'intérêt $ROI_k$ optiquement couplée à un cristal photonique $16_k$ dont la longueur d'onde de résonance $\lambda_0$ est considérée comme non absorbée par l'analyte. La connaissance de la fonction d'illumination *f* permet passer d'une intensité mesurée, à la longueur d'onde non absorbée $\lambda_0$, à l'intensité de référence $i_{ref}(\lambda_a)$, à la longueur d'onde d'absorption $\lambda_a$.

Les exemples décrits en lien avec les figures 10A à 10D illustrent la capacité d'un support résonant, tel que précédemment décrit, d'obtenir un spectre en longueur d'onde de l'onde lumineuse s'étant propagée à travers l'échantillon. Dans ce mode de réalisation, on utilise le fait que ce spectre comporte la signature d'analytes présents dans l'échantillon, présentant une absorption significative dans une ou plusieurs longueurs d'onde de résonance $\lambda_k$ de la plage de résonance $\Delta\lambda_r$. Comme évoqué en lien avec le premier mode de réalisation, la résolution spectrale dépend d'un pas de discrétisation $d\lambda_k$ représentant un décalage de la longueur d'onde de résonance de deux cristaux photoniques $16_k$, $16_{k+1}$ adjacents du support. Ce pas de discrétisation peut être très fin, typiquement inférieur à 10nm. Cela permet une identification précise des longueurs d'onde de résonance dans lesquelles une absorption de l'onde lumineuse d'illumination est constatée. Il en résulte une identification précise de l'analyte à l'origine de l'absorption. La comparaison avec une mesure de référence permet également une quantification de la quantité d'analyte.

Lorsque l'échantillon est un gaz, une boucle de préconcentration peut être disposée en amont du dispositif. De façon connue, une telle boucle comporte un média absorbant, apte à piéger, de façon réversible, une ou plusieurs espèces gazeuses circulant dans la boucle. Cela permet un stockage réversible d'un analyte. Préalablement à la mesure, le média absorbant est configuré pour libérer les espèces gazeuses piégées. Le recours à une telle boucle de préconcentration permet d'augmenter la quantité d'analyte entre la source de lumière et le support résonant du dispositif.

Quels que soient les modes de réalisation, l'échantillon est de préférence spatialement homogène. Par spatialement homogène, il est entendu que, au moins selon une ligne de cristaux photoniques, la quantité d'analyte dans l'échantillon est considérée comme constante.

L'invention pourra être utilisée pour la détection et la quantification d'un analyte dans des échantillons, par exemple dans le domaine de l'analyse biologique ou de l'aide au diagnostic médical. L'invention peut également être mise en oeuvre pour le contrôle de procédés industriels, par exemple dans l'agroalimentaire, ou encore dans le contrôle de l'environnement.

## Revendications

1. Procédé d'analyse d'un échantillon (20), l'échantillon étant susceptible de comporter un analyte, l'échantillon s'étendant sur un support résonant (15), le support résonant comportant une surface sur laquelle s'étendent plusieurs cristaux photoniques ($16_k$, $16_{k+1}$), séparés les uns des autres, de telle sorte que l'échantillon s'étend entre une source de lumière (10) et les cristaux photoniques, les cristaux photoniques étant tels que :

   - une longueur d'onde de résonance ($\lambda_k$) est associée à chaque cristal photonique ($16_k$), les longueurs d'onde de résonance des cristaux photoniques définissant une plage spectrale de résonance ($\Delta\lambda_r$), s'étendant entre 2 $\mu$m et 20 $\mu$m ;
   - la transmission ou la réflexion de la lumière, par chaque cristal photonique est maximale à la longueur d'onde de résonance qui lui est associée ;

   le procédé comportant les étapes suivantes :

   a) illumination du support résonant par la source de lumière, la source de lumière émettant une onde lumineuse d'illumination (11), définissant une bande spectrale d'illumination ($\Delta\lambda$) recouvrant au moins en partie la bande spectrale de résonance ($\Delta\lambda_r$), de telle sorte que plusieurs cristaux photoniques sont simultanément illuminés ;
   b) acquisition d'une image (I) du support résonant, dite image de mesure, par un capteur d'image, l'image comportant des régions d'intérêt ($ROI_k$) différentes, chaque région d'intérêt étant optiquement couplée à un cristal photonique ($16_k$) de telle sorte que chaque région d'intérêt représente une intensité transmise ou réfléchie par chaque cristal photonique ($16_k$), lors de l'illumination du support résonant;

   puis détermination de la présence de l'analyte dans l'échantillon à partir de l'image de mesure ; le procédé étant **caractérisé en ce que**

   chaque cristal photonique comporte :

   - des premiers trous ($23_1$), ménagés dans une couche mince (22), ayant une première dimension ($R_1$), la première dimension étant un rayon ou une diagonale, les premiers trous définissant un premier motif périodique;
   - des deuxièmes trous ($23_2$), ménagés dans la couche mince (22), ayant une deuxième dimension ($R_2$), la deuxième dimension étant strictement inférieure à la première dimension, les deuxièmes trous définissant un deuxième motif périodique ;
   - le deuxième motif et le premier motif sont décalés l'un par rapport à l'autre, parallèlement à la surface du support résonant, selon un décalage spatial ($\delta$), le décalage spatial étant variable entre au moins deux cristaux photoniques différents;

   de telle sorte que la longueur d'onde de résonance ($\lambda_k$) associée à chaque cristal photonique ($16_k$) dépend de la première dimension, de la deuxième dimension, et du décalage spatial.

2. Procédé selon la revendication 1, comportant également les étapes suivantes :

   c) prise en compte d'une image de référence ($I_{ref}$), l'image de référence étant représentative d'une image acquise par le capteur d'image, lorsque le support résonant est illuminé dans la bande spectrale d'illumination ($\Delta\lambda$), dans une

configuration de référence, en l'absence de d'analyte ;

d) comparaison de l'image de mesure, acquise lors de l'étape b) avec l'image de référence, prise en compte lors de l'étape c) ;

e) en fonction de la comparaison, détermination de la présence de l'analyte dans l'échantillon.

3. Procédé selon l'une quelconque des revendications précédentes, dans lequel plusieurs cristaux photoniques ($16_k$) sont alignés selon une ligne parallèlement à un axe longitudinal (X), de telle sorte que la longueur d'onde de résonance ($\lambda_k$) respectivement associée à un cristal photonique augmente, ou diminue, progressivement le long de l'axe longitudinal.

4. Procédé selon la revendication 3, dans lequel le support résonant comporte différentes lignes de cristaux photoniques parallèles les unes aux autres, et dans lequel les cristaux photoniques forment des colonnes, parallèlement à un axe latéral (Y), de telle sorte que les cristaux photoniques d'une même colonne présentent une même longueur d'onde de résonance ($\lambda_k$).

5. Procédé selon l'une quelconque des revendications précédentes, dans lequel les cristaux photoniques s'étendent selon un plan de support ($P_{15}$), l'onde lumineuse d'illumination (11) se propageant jusqu'au support résonant parallèlement à un axe de propagation (Z) perpendiculaire ou sensiblement perpendiculaire au plan de support.

6. Procédé selon l'une quelconque des revendications précédentes, dépendant de la revendication 2, comportant, préalablement à l'étape a), une étape de formation de l'image de référence ($I_{ref}$), comportant :

- illumination du support résonant par la source de lumière, dans la bande spectrale d'illumination, sans analyte entre la source de lumière et le support résonant;
- acquisition d'une image du support résonant par le capteur d'image, l'image ainsi acquise formant l'image de référence.

7. Procédé selon l'une quelconque des revendications 1 à 5, dépendant de la revendication 2, dans lequel l'image référence ($I_{ref}$) est une image obtenue en :

- illuminant, selon la bande spectrale d'illumination ($\Delta\lambda$), un support de référence, considéré comme représentatif du support résonant (15) illuminé dans l'étape a), la quantité d'analyte entre le support de référence et la source de lumière (10) étant considérée comme nulle ;
- formant une image du support de référence, l'image ainsi formée correspondant à l'image de référence.

8. Procédé selon l'une quelconque des revendications 1 à 5, dans lequel le support résonant comporte des cristaux photoniques de référence,

- dont la bande spectrale de résonance n'est pas modifiée par l'analyte ;
- ou dont la bande spectrale de résonance correspond à une longueur d'onde non absorbée par l'échantillon ;

et dans lequel l'image de référence ($I_{ref}$) est une image des cristaux photoniques de référence lorsqu'ils sont illuminés selon la bande spectrale d'illumination ($\Delta\lambda$).

9. Procédé selon la revendication 8, dans lequel l'image de référence ($I_{ref}$) et l'image de mesure forment deux parties distinctes d'une même image acquise par le capteur d'image.

10. Procédé selon l'une quelconque des revendications 6 à 9, dans lequel :

- l'échantillon est un liquide ;
- le support résonant (15) est en contact avec l'échantillon ;
- le support résonant (15) comporte des cristaux photoniques ($16_k$) adressant l'analyte, configurés pour être en contact avec l'analyte ;
- l'image de mesure comporte des régions d'intérêt ($ROI_k$) associées à l'analyte, optiquement couplées aux cristaux photoniques adressant l'analyte ;
- sous l'effet du contact avec l'analyte, la longueur d'onde de résonance ($\lambda_k$) des cristaux photoniques adressant l'analyte subit une variation spectrale ($\delta\lambda$);
- l'illumination étant telle que l'intensité d'illumination est variable, dans la bande spectrale de résonance, selon une fonction spectrale d'illumination (*f*).

11. Procédé selon la revendication 10, dans lequel pour chaque cristal photonique ($16_k$) adressant l'analyte, la longueur d'onde de résonance ($\lambda_k$) dépend d'un indice de réfraction de l'échantillon, au niveau d'une interface entre l'échantillon et le cristal photonique, l'indice de réfraction variant en fonction de la quantité d'analyte au contact du cristal photonique.

12. Procédé selon l'une quelconque des revendications 10 ou 11, dans lequel l'étape e) comporte les sousétapes suivantes :

(i) à partir de l'image de mesure (I) détermination d'un profil, dit profil de mesure, de l'intensité des régions d'intérêt associées à l'analyte ;

(ii) à partir de l'image de référence ($I_{ref}$), détermination d'un profil, dit profil de référence, représentatif de l'intensité, en l'absence d'analyte ou en présence d'une quantité connue d'analyte dans l'échantillon, des régions d'intérêt associées à l'analyte ;

de telle sorte que la présence de l'analyte est déterminée en fonction d'un décalage ($\Delta x$) du profil de mesure par rapport au profil de référence.

13. Procédé selon l'une quelconque des revendications 10 à 12, dans lequel l'étape e) comporte les sous-étapes suivantes :

(i) sur l'image de mesure, détermination d'une position, dite position de mesure, d'une région d'intérêt présentant une valeur d'intensité maximale parmi les régions d'intérêt associées à l'analyte ;
(ii) sur l'image de référence, détermination d'une position, dite position de référence, d'une région d'intérêt présentant une valeur d'intensité maximale parmi les régions d'intérêt associées à l'analyte ;

de telle sorte que la présence de l'analyte est déterminée en fonction d'un décalage de la position de mesure par rapport à la position de référence.

14. Procédé selon l'une quelconque des revendications 10 à 13 dans lequel l'étape e) comporte également une estimation d'une quantité d'analyte dans l'échantillon, en fonction de la comparaison entre l'image de mesure et de l'image de référence.

15. Procédé selon la revendication 14, dépendant de l'une quelconque des revendications 12 ou 13, dans lequel la quantité d'analyte est estimée en fonction :

- du décalage du profil de mesure par rapport au profil de référence ;
- ou du décalage de la position de mesure par rapport à la position de référence.

16. Procédé selon l'une quelconque des revendications précédentes, dans lequel l'échantillon (20) est disposé entre la source de lumière (10) et le support résonant (15), et dans lequel l'analyte est apte à absorber l'onde lumineuse d'illumination (11), émise par la source de lumière, dans une bande spectrale d'absorption ($\Delta \lambda_a$), le procédé étant tel que la bande spectrale d'absorption comporte au moins une longueur d'onde d'absorption ($\lambda_a$) correspondant à une longueur d'onde de résonance ($\lambda_k$) d'un cristal photonique, le procédé comportant, à partir de l'image de mesure :

- une détermination d'au moins un cristal photonique, dont la longueur d'onde de résonance ($\lambda_k$) correspond à la longueur d'onde d'absorption ($\lambda_a$);
- une identification de la longueur d'onde de résonance ($\lambda_k$) dudit cristal photonique ;
- une détermination de la présence de l'analyte à partir de la longueur d'onde de résonance ($\lambda_k$) du cristal photonique ainsi déterminé.

17. Procédé selon la revendication 16, comportant :

- à partir de l'image de mesure, une estimation d'une intensité lumineuse d'absorption ($i(\lambda_a)$), transmise ou réfléchie par au moins un cristal photonique dont la longueur d'onde de résonance est comprise dans la bande spectrale d'absorption ;
- une estimation d'une intensité lumineuse de référence ($i_{ref}(\lambda_a)$), transmise ou réfléchie par ledit cristal photonique, en l'absence d'analyte ;
- une estimation d'une quantité d'analyte à partir de l'intensité lumineuse d'absorption et de l'intensité lumineuse de référence.

18. Procédé selon l'une quelconque des revendications 16 ou 17, dans lequel l'échantillon est un gaz ou un liquide ou un solide.

**Patentansprüche**

1. Verfahren zur Analyse einer Probe (20), wobei die Probe einen Analyten enthalten könnte, wobei sich die Probe auf einem Resonanzträger (15) erstreckt, wobei der Resonanzträger eine Oberfläche umfasst, auf der sich mehrere photonische Kristalle ($16_k$, $16_{k+1}$) erstrecken, die voneinander getrennt sind, so dass sich die Probe zwischen einer Lichtquelle (10) und den photonischen Kristallen erstreckt, wobei die photonischen Kristalle so beschaffen sind, dass:

- jedem photonischen Kristall ($16_k$) eine Resonanzwellenlänge ($\lambda_k$) zugehörig ist, wobei die Resonanzwellenlängen der photonischen Kristalle einen Resonanzspektralbereich ($\Delta \lambda_r$) definieren, der sich zwischen 2 $\mu$m und 20 $\mu$m erstreckt;
- die Transmission oder Reflexion des Lichts durch jedes photonische Kristall bei der ihm zugehörigen Resonanzwellenlänge am größten ist;

wobei das Verfahren die folgenden Schritte umfasst:

a) Beleuchten des Resonanzträgers durch die Lichtquelle, wobei die Lichtquelle eine Beleuchtungswellenlänge (11) emittiert, die

ein Beleuchtungsspektralband ($\Delta\lambda$) definiert, das mindestens teilweise das Resonanzspektralband ($\Delta\lambda_r$) abdeckt, so dass mehrere photonische Kristalle gleichzeitig beleuchtet werden;
b) Erfassen eines Bildes (I) des Resonanzträgers, Messbild genannt, durch einen Bildsensor, wobei das Bild verschiedene Bereiche von Interesse ($ROI_k$) umfasst, wobei jeder Bereich von Interesse optisch an ein photonisches Kristall ($16_k$) gekoppelt ist, so dass jeder Bereich von Interesse eine Intensität darstellt, die von jedem photonischen Kristall ($16_k$) bei der Beleuchtung des Resonanzträgers transmittiert oder reflektiert wird;

dann Bestimmen der Anwesenheit des Analyten in der Probe auf Grundlage des Messbildes;
wobei das Verfahren **dadurch gekennzeichnet ist, dass**
jeder photonische Kristall umfasst:

- erste Löcher ($23_1$), die in einer dünnen Schicht (22) angeordnet sind und eine erste Abmessung ($R_1$) aufweisen, wobei die erste Abmessung ein Radius oder eine Diagonale ist und die ersten Löcher ein erstes periodisches Motiv definieren;
- zweite Löcher ($23_2$), die in der dünnen Schicht (22) angeordnet sind und eine zweite Abmessung ($R_2$) aufweisen, wobei die zweite Abmessung unbedingt kleiner als die erste Abmessung ist, wobei die zweiten Löcher ein zweites periodisches Motiv definieren;
- das zweite Motiv und das erste Motiv parallel zur Oberfläche des Resonanzträgers gemäß einem räumlichen Versatz ($\delta$) gegeneinander versetzt sind, wobei der räumliche Versatz zwischen mindestens zwei verschiedenen photonischen Kristallen variabel ist;

so dass die zu jedem photonischen Kristall ($16_k$) zugehörige Resonanzwellenlänge ($\lambda_k$) von der ersten Abmessung, der zweiten Abmessung und dem räumlichen Versatz abhängt.

2. Verfahren nach Anspruch 1, das auch die folgenden Schritte umfasst:

c) Berücksichtigen eines Referenzbildes ($I_{ref}$), wobei das Referenzbild repräsentativ für ein Bild ist, das vom Bildsensor erfasst wird, wenn der Resonanzträger im Beleuchtungsspektralband ($\Delta\lambda$) in einer Referenzkonfiguration bei Abwesenheit des Analyten beleuchtet wird;

d) Vergleichen des in Schritt b) erfassten Messbildes mit dem in Schritt d) berücksichtigten Referenzbild;
e) abhängig vom Vergleich Bestimmen der Anwesenheit des Analyten in der Probe.

3. Verfahren nach einem der vorhergehenden Ansprüche, wobei mehrere photonische Kristalle ($16_k$) in einer Linie parallel zu einer Längsachse (X) ausgerichtet sind, so dass die jeweils zu einem photonischen Kristall zugehörige Resonanzwellenlänge ($\lambda_k$) der Länge der Längsachse nach allmählich zunimmt oder abnimmt.

4. Verfahren nach Anspruch 3, wobei der Resonanzträger verschiedene, zueinander parallele Linien photonischer Kristalle umfasst und wobei die photonischen Kristalle Spalten parallel zu einer Seitenachse (Y) bilden, so dass die photonischen Kristalle einer selben Spalte eine selbe Resonanzwellenlänge ($\lambda_k$) aufweisen.

5. Verfahren nach einem der vorhergehenden Ansprüche, wobei die photonischen Kristalle sich in einer Trägerebene ($P_{15}$) erstrecken, wobei sich die Beleuchtungslichtwelle (11) bis zum Resonanzträger parallel zu einer Ausbreitungsachse (Z) senkrecht oder im Wesentlichen senkrecht zur Trägerebene ausbreitet.

6. Verfahren nach einem der vorhergehenden Ansprüche, abhängig von Anspruch 2, das vor Schritt a) einen Schritt des Bildens des Referenzbildes ($I_{ref}$) umfasst und umfasst:

- Beleuchten des Resonanzträgers durch die Lichtquelle im Beleuchtungsspektralband ohne Analyten zwischen der Lichtquelle und dem Resonanzträger;
- Erfassen eines Bildes des Resonanzträgers durch den Bildsensor, wobei das so erfasste Bild das Referenzbild bildet.

7. Verfahren nach einem der Ansprüche 1 bis 5, abhängig von Anspruch 2, wobei das Referenzbild ($I_{ref}$) ein Bild ist, das erhalten wird durch:

- Beleuchten eines Referenzträgers, der für den in Schritt a) beleuchteten Resonanzträger (15) als repräsentativ betrachtet wird, im Beleuchtungsspektralband ($\Delta\lambda$), wobei die Menge des Analyten zwischen dem Referenzträger und der Lichtquelle (10) als null betrachtet wird;
- Bilden eines Bildes des Referenzträgers, wobei das so gebildete Bild dem Referenzbild entspricht.

8. Verfahren nach einem der Ansprüche 1 bis 5, wobei der Resonanzträger photonische Referenzkristalle umfasst,

- deren Resonanzspektralband durch den Analyten nicht verändert wird;
- oder deren Resonanzspektralband einer durch die Probe nicht absorbierten Wellenlänge entspricht;

und wobei das Referenzbild ($I_{ref}$) ein Bild der photonischen Referenzkristalle ist, wenn sie im Beleuchtungsspektralband ($\Delta\lambda$) beleuchtet werden.

9. Verfahren nach Anspruch 8, wobei das Referenzbild ($I_{ref}$) und das Messbild zwei gesonderte Teile eines selben vom Bildsensor erfassten Bildes bilden.

10. Verfahren nach einem der Ansprüche 6 bis 9, wobei:

- die Probe eine Flüssigkeit ist;
- der Resonanzträger (15) sich in Kontakt mit der Probe befindet;
- der Resonanzträger (15) photonische Kristalle ($16_k$) umfasst, die den Analyten ansprechen und dazu eingerichtet sind, sich in Kontakt mit dem Analyten zu befinden;
- das Messbild zum Analyten zugehörige Bereiche von Interesse ($ROI_k$) umfasst, die optisch an die photonischen Kristalle gekoppelt sind, die den Analyten ansprechen;
- unter der Wirkung des Kontakts mit dem Analyten die Resonanzwellenlänge ($\lambda_k$) der photonischen Kristalle, die den Analyten ansprechen, eine spektrale Variation ($\delta\lambda$) erfährt;
- die Beleuchtung so beschaffen ist, dass die Beleuchtungsintensität im Resonanzspektralband entsprechend einer Beleuchtungsspektralfunktion ($f$) variabel ist.

11. Verfahren nach Anspruch 10, wobei für jedes photonische Kristall ($16_k$), das einen Analyten anspricht, die Resonanzwellenlänge ($\lambda_k$) von einem Brechungsindex der Probe an der Grenzfläche zwischen der Probe und dem photonischen Kristall abhängt, wobei der Brechungsindex abhängig von der Menge des Analyten in Kontakt mit dem photonischen Kristall variiert.

12. Verfahren nach einem der Ansprüche 10 oder 11, wobei Schritt e) die folgenden Teilschritte umfasst:

(i) auf Grundlage des Messbildes (I) Bestimmen eines Messprofil genannten Profils der Intensität der zum Analyten zugehörigen Bereiche von Interesse;
(ii) auf Grundlage des Referenzbildes ($I_{ref}$) Bestimmen eines Referenzprofil genannten Profils, das für die Intensität der zum Analyten zugehörigen Bereiche von Interesse repräsentativ ist, in Abwesenheit des Analyten oder in Anwesenheit einer bekannten Menge des Analyten in der Probe;

so dass die Anwesenheit des Analyten abhängig von einem Versatz ($\Delta x$) des Messprofils gegenüber dem Referenzprofil bestimmt wird.

13. Verfahren nach einem der Ansprüche 10 bis 12, wobei Schritt e) die folgenden Teilschritte umfasst:

(i) auf dem Messbild Bestimmen einer Messposition genannten Position eines Bereichs von Interesse, die einen maximalen Intensitätswert unter den zum Analyten zugehörigen Bereichen von Interesse aufweist;
(ii) auf dem Referenzbild Bestimmen einer Referenzposition genannten Position eines Bereichs von Interesse, die einen maximalen Intensitätswert unter den zum Analyten zugehörigen Bereichen von Interesse aufweist;

so dass die Anwesenheit des Analyten abhängig von einem Versatz der Messposition gegenüber der Referenzposition bestimmt wird.

14. Verfahren nach einem der Ansprüche 10 bis 13, wobei Schritt e) auch eine Schätzung einer Menge des Analyten in der Probe abhängig vom Vergleich zwischen dem Messbild und dem Referenzbild umfasst.

15. Verfahren nach Anspruch 14, abhängig von einem der Ansprüche 12 oder 13, wobei die Menge des Analyten geschätzt wird abhängig von:

- dem Versatz des Messprofils gegenüber dem Referenzprofil;
- oder dem Versatz der Messposition gegenüber der Referenzposition.

16. Verfahren nach einem der vorhergehenden Ansprüche, wobei die Probe (20) zwischen der Lichtquelle (10) und dem Resonanzträger (15) angeordnet ist und wobei der Analyt geeignet ist, die Beleuchtungswellenlänge (11), die von der Lichtquelle emittiert wird, in einem Absorptionsspektralband ($\Delta\lambda_a$) zu absorbieren, wobei das Verfahren so beschaffen ist, dass das Absorptionsspektralband mindestens eine Absorptionswellenlänge ($\lambda_a$) umfasst, die einer Resonanzwellenlänge ($\lambda_k$) eines photonischen Kristalls entspricht, wobei das Verfahren auf Grundlage des Messbildes umfasst:

- eine Bestimmung mindestens eines photonischen Kristalls, dessen Resonanzwellenlänge ($\lambda_k$) der Länge der Absorptionswellenlänge ($\lambda_a$) entspricht;

- eine Erkennung der Resonanzwellenlänge ($\lambda_k$) des photonischen Kristalls;
- eine Bestimmung der Anwesenheit des Analyten auf Grundlage der Resonanzwellenlänge ($\lambda_k$) des so bestimmten photonischen Kristalls.

**17.** Verfahren nach Anspruch 16, das umfasst:

- auf Grundlage des Messbildes eine Schätzung einer Absorptionslichtintensität ($i(\lambda_a)$), die durch mindestens einen photonischen Kristall transmittiert oder reflektiert wird und deren Resonanzwellenlänge im Absorptionsspektralband liegt;
- eine Schätzung einer Referenzlichtintensität ($i_{ref}(\lambda_a)$), die bei Abwesenheit des Analyten durch den photonischen Kristall transmittiert oder reflektiert wird;
- eine Schätzung einer Analytmenge auf Grundlage der Absorptionslichtintensität und der Referenzlichtintensität.

**18.** Verfahren nach einem der Ansprüche 16 oder 17, wobei die Probe ein Gas oder eine Flüssigkeit oder ein Festkörper ist.

**Claims**

**1.** Method for analyzing a sample (20), the sample being liable to comprise an analyte, the sample lying on a resonant holder (15), the resonant holder comprising a surface on which lie a plurality of photonic crystals ($16_k$, $16_{k+1}$), which are separate from one another, such that the sample lies between a light source (10) and the photonic crystals, the photonic crystals being such that:

- one resonant wavelength ($\lambda_k$) is associated with each photonic crystal ($16_k$), the resonant wavelengths of the photonic crystals defining a spectral range of resonance ($\Delta\lambda_r$), lying between 2 $\mu$m and 20 $\mu$m;
- the transmission or reflection of light by each photonic crystal is maximum at the resonant wavelength associated with it;

the method comprising the following steps:

a) illuminating the resonant holder with the light source, the light source emitting an illuminating light wave (11) that defines a spectral band of illumination ($\Delta\lambda$) that at least partially covers the spectral band of resonance ($\Delta\lambda_r$), such that a plurality of photonic crystals are simultaneously illuminated;

b) acquiring, with an image sensor, an image (I) of the resonant holder, which image is referred to as the measurement image, the image comprising different regions of interest ($ROI_k$), each region of interest being optically coupled to one photonic crystal ($16_k$) such that each region of interest represents an intensity transmitted or reflected by each photonic crystal ($16_k$), while the resonant holder is illuminated;

then determining whether the analyte is present in the sample on the basis of the measurement image;
the method being **characterized in that**

each photonic crystal comprises:

- first holes ($23_1$) that are formed in a thin layer (22) and that have a first dimension ($R_1$), the first dimension being a radius or a diagonal, the first holes defining a first periodic pattern;
- second holes ($23_2$) that are formed in the thin layer (22) and that have a second dimension ($R_2$), the second dimension being strictly smaller than the first dimension, the second holes defining a second periodic pattern;
- the second pattern and the first pattern are offset with respect to each other, parallel to the surface of the resonant holder, by a spatial offset ($\delta$), the spatial offset being variable between at least two different photonic crystals;

such that the resonant wavelength ($\lambda_k$) associated with each photonic crystal ($16_k$) depends on the first dimension, on the second dimension, and on the spatial offset.

**2.** Method according to Claim 1, also comprising the following steps:

c) taking into account a reference image ($I_{ref}$), the reference image being representative of an image acquired by the image sensor, when the resonant holder is illuminated in the spectral band of illumination ($\Delta\lambda$), in a reference configuration, in the absence of analyte;
d) comparing the measurement image, acquired in step b), with the reference image, taken into account in step c);
e) based on the comparison, determining whether the analyte is present in the sample.

**3.** Method according to either one of the preceding claims, wherein a plurality of photonic crystals ($16_k$) are aligned in a row parallel to a longitudinal axis (X), such that the resonant wavelength ($\lambda_k$) respectively associated with a photonic crystal gradually increases, or decreases, along the longitudinal axis.

**4.** Method according to Claim 3, wherein the resonant holder comprises various rows of photonic crystals parallel to one another, and wherein the photonic crystals form columns, parallel to a lateral axis (Y), such that the photonic crystals of a given column have the same resonant wavelength ($\lambda_k$).

**5.** Method according to any one of the preceding claims, wherein the photonic crystals lie in a holder plane ($P_{15}$), the illuminating light wave (11) propagating to the resonant holder parallel to a propagation axis (Z) that is perpendicular or substantially perpendicular to the holder plane.

**6.** Method according to any one of the preceding claims, when dependent on Claim 2, comprising, prior to step a), a step of forming the reference image ($I_{ref}$), comprising:

- illuminating the resonant holder with the light source, in the spectral band of illumination, without analyte between the light source and the resonant holder;
- acquiring an image of the resonant holder with the image sensor, the image thus acquired forming the reference image.

**7.** Method according to any one of Claims 1 to 5, when dependent on Claim 2, wherein the reference image ($I_{ref}$) is an image obtained by:

- illuminating, in the spectral band of illumination ($\Delta\lambda$), a reference holder that is considered to be representative of the resonant holder (15) illuminated in step a), the amount of analyte between the reference holder and the light source (10) being considered to be zero;
- forming an image of the reference holder, the image thus formed corresponding to the reference image.

**8.** Method according to any one of Claims 1 to 5, wherein the resonant holder comprises reference photonic crystals,

- the spectral band of resonance of which is not modified by the analyte;
- or the spectral band of resonance of which corresponds to a wavelength not absorbed by the sample;

and wherein the reference image ($I_{ref}$) is an image of the reference photonic crystals when they are illuminated in the spectral band of illumination ($\Delta\lambda$).

**9.** Method according to Claim 8, wherein the reference image ($I_{ref}$) and the measurement image form two distinct parts of the same image acquired by the image sensor.

**10.** Method according to any of Claims 6 to 9, wherein:

- the sample is a liquid;
- the resonant holder (15) makes contact with the sample;
- the resonant holder (15) comprises photonic crystals ($16_k$) addressing the analyte, which are configured to make contact with the analyte;
- the measurement image comprises regions of interest ($ROI_k$) that are associated with the analyte, and that are optically coupled to the photonic crystals addressing the analyte;
- under the effect of contact with the analyte, the resonant wavelength ($\lambda_k$) of the photonic crystals addressing the analyte undergoes a spectral variation ($\delta\lambda$);
- the illumination being such that the illumination intensity varies, in the spectral band of resonance, according to a spectral illumination function (f).

**11.** Method according to Claim 10, wherein, for each photonic crystal ($16_k$) addressing the analyte, the resonant wavelength ($\lambda_k$) depends on a refractive index of the sample, at an interface between the sample and the photonic crystal, the refractive index varying as a function of the amount of analyte making contact with the photonic crystal.

**12.** Method according to either one of Claims 10 and 11, wherein step e) comprises the following sub-steps:

(i) on the basis of the measurement image (I), determining a profile, referred to as the measurement profile, of the intensity of the regions of interest associated with the analyte;
(ii) on the basis of the reference image ($I_{ref}$), determining a profile, referred to as the reference profile, representative of the intensity, in the absence of analyte or in the presence of a known amount of analyte in the sample, of the regions of interest associated with the analyte;

such that whether the analyte is present is determined depending on a shift ($\Delta x$) of the measurement profile with respect to the reference profile.

**13.** Method according to any one of Claims 10 to 12, wherein step e) comprises the following sub-steps:

(i) in the measurement image, determining a position, referred to as the measurement position, of a region of interest exhibiting a maximum intensity value among the regions of interest associated with the analyte;
(ii) in the reference image, determining a position, referred to as the reference position, of a region of interest exhibiting a maximum intensity value among the regions of interest associated with the analyte;

such that the presence of the analyte is determined depending on a shift of the measurement position with respect to the reference position.

14. Method according to any one of Claims 10 to 13, wherein step e) also comprises estimating an amount of analyte in the sample, depending on the comparison between the measurement image and the reference image.

15. Method according to Claim 14, when dependent on either one of Claims 12 and 13, wherein the amount of analyte is estimated depending on:

   - the shift of the measurement profile with respect to the reference profile;
   - or the shift of the measurement position with respect to the reference position.

16. Method according to any one of the preceding claims, wherein the sample (20) is placed between the light source (10) and the resonant holder (15), and wherein the analyte is able to absorb the illuminating light wave (11), emitted by the light source, in a spectral band of absorption ($\Delta\lambda_a$), the method being such that the spectral band of absorption comprises at least one absorption wavelength ($\lambda_a$) corresponding to a resonant wavelength ($\lambda_k$) of a photonic crystal, the method comprising, on the basis of the measurement image:

   - determining at least one photonic crystal, the resonant wavelength ($\lambda_k$) of which corresponds to the absorption wavelength ($\lambda_a$);
   - identifying the resonant wavelength ($\lambda_k$) of said photonic crystal;
   - determining whether the analyte is present on the basis of the resonant wavelength ($\lambda_k$) of the photonic crystal thus determined.

17. Method according to Claim 16, comprising:

   - on the basis of the measurement image, estimating an absorption light intensity ($i(\lambda_a)$), transmitted or reflected by at least one photonic crystal the resonant wavelength of which is comprised in the spectral band of absorption;
   - estimating a reference light intensity ($i_{ref}(\lambda_a)$), transmitted or reflected by said photonic crystal, in the absence of analyte;
   - estimating an amount of analyte on the basis of the absorption light intensity and of the reference light intensity.

18. Method according to either one of Claims 16 and 17, wherein the sample is a gas or a liquid or a solid.

**Fig. 1A**

**Fig. 1B**

**Fig. 1C**

**Fig. 1D**

**Fig. 2A**

**Fig. 2B**

**Fig. 2C**

**Fig. 2D**

**Fig. 2E**

**Fig. 2F**

**Fig. 2G**

**Fig. 2H**

**Fig. 3A**

**Fig. 3B**

**Fig. 3C**

**Fig. 4A**

**Fig. 4B**

**Fig. 4C**

(μm)

**Fig. 4D**

$23_1$

$23_2$

$16_k$

**Fig. 5A**

$23_1$

$23_2$

$16_k$

**Fig. 5B**

22
24

25

**Fig. 6A**

22'
22
24

25

**Fig. 6B**

R

22'
22
24

25

**Fig. 6C**

PM    R

22'
22
24

25

**Fig. 6D**

22'
22
24

25

**Fig. 6E**

**Fig. 6F**

**Fig. 6G**

**Fig. 6H**

**Fig. 6I**

**Fig. 6J**

**Fig. 6K**

**Fig. 6L**

**Fig. 6M**

**Fig. 7A**

**Fig. 7B**

10

$17_1$

1

11

18

20

21

X

Z

15

16k

$17_2$

12

30 31

$32_k$   $32_k$   $32_k$   $32_k$

**Fig. 8A**

Δ

X   Y

$17_1$

X   Y

$17_2$

**Fig. 8B**

Fig. 9A

Fig. 9B

Fig. 9C

**Fig. 10A**

**Fig. 10B**

**Fig. 10C**

**Fig. 10D**

$\lambda_{k1}$  $\lambda_{k2}$  $\lambda_{k3}$  $\lambda_{k4}$  $\lambda$

**Fig. 10E**

$\lambda_{k1}$  $\lambda_{k2}$  $\lambda_{k3}$  $\lambda_{k4}$  $\lambda$

**Fig. 10F**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004155309 A

**Littérature non-brevet citée dans la description**

- **ANDREAS TITL et al.** imaging based molecular barcoding with pixelated dielectric metasurfaces. *Science,* 08 Juin 2018, vol. 360 (6393), 1105-1109

- **CHENG F. et al.** Tuning asymmetry parameter of Fano résonance of spoof surface plasmons by modes coupling. *Applied Physics Letters,* 26 Mars 2012, vol. 100 (3